(19) Europäisches Patentamt
European Patent Office
Office européen des brevets

(11) **EP 4 612 244 B1**

(12) **EUROPEAN PATENT SPECIFICATION**

(45) Date of publication and mention of the grant of the patent:
**26.08.2026 Bulletin 2026/35**

(21) Application number: **23800834.6**

(22) Date of filing: **03.11.2023**

(51) International Patent Classification (IPC):
***C09D 11/101*** *(2014.01)* ***C09D 11/50*** *(2014.01)*
***C09D 11/38*** *(2014.01)* ***C09D 11/03*** *(2014.01)*
***B41M 3/14*** *(2006.01)*

(52) Cooperative Patent Classification (CPC):
**C09D 11/101; B41M 3/14; C09D 11/03; C09D 11/38; C09D 11/50;** B41M 7/0081

(86) International application number:
**PCT/EP2023/080621**

(87) International publication number:
**WO 2024/094829 (10.05.2024 Gazette 2024/19)**

(54) **RYLENE-BASED UV CURABLE SECURITY INK COMPOSITIONS**

UV-HÄRTBARE SICHERHEITSTINTENZUSAMMENSETZUNGEN AUF RYLENBASIS

COMPOSITIONS D’ENCRE DE SÉCURITÉ DURCISSABLE PAR UV À BASE DE RYLÈNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Validation States:
**MA**

(30) Priority: **03.11.2022 EP 22205394**

(43) Date of publication of application:
**10.09.2025 Bulletin 2025/37**

(73) Proprietor: **SICPA HOLDING SA**
**1008 Prilly (CH)**

(72) Inventors:
- **PASQUIER, Cécile**
  **1723 Marly (CH)**
- **KAENEL, Cindy**
  **1372 Bavois (CH)**
- **CARTESIO, Salvatore**
  **98057 Milazzo (ME) (IT)**
- **BAILLEUL, Mickael**
  **25160 Labergement Sainte Marie (FR)**
- **ELIGERT, Laurent**
  **1030 Bussigny (CH)**
- **VIENET, Arnaud**
  **1846 Chessel (CH)**

(74) Representative: **GatesIP**
**Dorfplatz 1**
**6060 Sarnen (CH)**

(56) References cited:
**EP-A1- 3 523 303** **EP-A1- 3 571 201**
**WO-A1-2019/243286** **US-A1- 2005 195 265**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 612 244 B1

## Description

## FIELD OF THE INVENTION

The present invention relates to the field of UV curable security ink compositions based on rylene-based compounds and their use in security printing inks as well as security features based on such security inks.

## BACKGROUND OF THE INVENTION

With the constantly improving quality of color photocopies and printing techniques and in an attempt to protect security documents such as banknotes, value documents or cards, transportation tickets or cards, tax banderols and product labels, it has been the conventional practice to incorporate various security features in these documents that resist reproducibility and guard against counterfeiting, falsifying or illegal reproduction.

As the menace of secure documents such as currencies, passports, or identity cards being counterfeited increases around the world, this situation has become a very critical issue for governments and society in general. For example, criminal organizations may use fake passports or identity cards for trafficking people. As reprographic technologies become more and more sophisticated, it becomes even more difficult to make a clear distinction between a fake document and the original. Document security has therefore a considerable impact on the economy of the countries and on the victims of illicit traffic involving counterfeit documents.

Security features are also incorporated into (excise) tax stamps. The main purpose of these stamps is to provide the governments a physical means of collecting tax. Other purposes may be to provide anti-tampering/anti-reuse seal or as a carrier of serialized codes for item-level production monitoring and supply chain track and trace.

Security features are therefore incorporated into documents to ensure their integrity. Security features can generally be classified into "covert" security features on the one hand and "overt" security features on the other hand. The protection provided by covert security features relies on the concept that such features are difficult to detect, typically requiring specialized equipment and knowledge for detection, whereas "overt" security features rely on the concept of being easily detectable with the unaided human senses, e.g. such features may be visible and/or detectable via the tactile senses while still being difficult to produce and/or to copy. However, the effectiveness of overt security features depends to a great extent on their easy recognition as a security feature, because most users, and particularly those having no prior knowledge of the security features of a document or item secured therewith, will only then actually perform a security check based on said security feature if they have actual knowledge of their existence and nature.

UV curable ink compositions are known in the art and are widely used to impart security features. These are cured through rapid photo-induced polymerizations. Since the UV curing process is essentially solvent free, the necessity for time consuming and expensive pollution abatement procedures is greatly reduced.

UV curable ink compositions offer several other benefits not associated with thermally cured coatings. First, faster cure times offer substantial economic benefits. Furthermore, heat sensitive materials can be safely coated and cured with UV light without thermal degradation of heat sensitive substrates. Additionally, UV light is a relatively low cost of energy due to its widespread availability.

To provide specific color to the UV curable ink compositions, various pigments and dyes may be added. Such pigments and dyes are based on a vast variety of chemical structures.

Fluorescent rylene-based dyes or pigments are known in the art (e.g. US 20080167467) for high-end covert security features. These compounds are primarily based on a rylene substructure, as depicted later. Examples of rylene-based dyes or pigments are perylenes, terrylenes and quaterrylenes.

Polymer grafted rylene-based compounds have been known to be incorporated in security ink compositions. For example, WO2011/147857 A1 discloses perylene-based printing ink compositions, whereas WO 2012/160182 A1 discloses terrylene- and quaterrylene-based ink compositions. The solubility of the prior art rylene-dyes is increased by covalently grafting polymeric phenolic groups onto the rylene substructure. However, rylene-based dyes still suffer from various issues like insufficient fluorescence, light fastness and poor solubility in ink compositions. Especially, polymer grafted rylene-based compounds may be needed in up to 15 wt.% amount in colored ink compositions to ensure good detection. Their high amount and incompatibility with monomers and/or oligomers used in UV-curable ink compositions leads to deteriorated printing performance. Additionally, EP3571201 might be cited as prior art.

Apart from the above, it is always necessary to ensure good and homogenous printability of the security ink compositions and to avoid (visible) printing defects, while ensuring easy and reliable detection of the security features using existing equipment. An added economic benefit is to ensure the addition of the (rylene-based) dyes or pigments in minimal amounts into the ink compositions to ensure the homogeneity of the ink compositions and better printability.

Therefore, a need remains for UV curable ink compositions which overcome the deficiencies of the prior art

## SUMMARY OF THE INVENTION

In a one aspect, the invention relates to a UV curable security ink composition comprising:

a) from about 40 to about 95 wt.%, preferably from about 60 to 95 wt.%, of one or more radically curable monomers, one or more oligomers or mixtures thereof;
b) from about 0.1 to about 20 wt.%, preferably from about 1 to 15 wt.%, of at least one free radical photoinitiator;
c) from about 0.005 to about 5 wt.%, preferably from about 0.01 to 1 wt.%, of at least one compound P,

wherein P is a compound having a structure selected from the group consisting of (1) and (2)

(3)
R1
(W)
R2
(1)
(3)
O
N
R2
R3
O
(2)

wherein
(W) is a rylene substructure comprising preferably either one of perylene, terrylene or quaterrylene core structure and comprising at least one substituent of formula (3) attached to rylene substructure (W),

$$-O-Ar^4-Y-O-C(=O)-C(R')=CH_2$$

(3)

$R^1$, $R^2$, $R^3$ are independently carbocyclic or heterocyclic substituents, wherein $R^1$ and $R^2$ are attached, preferably directly, to the imide N of rylene substructure (W) and $R^3$ is directly attached to the naphthalene ring in case of compound (2); and
wherein

- - - - - denotes the optional presence of the $R^3$ substituent,
$Ar^4$ is an aromatic substituent,
Y is a linker,
R' is either H or methyl;

d) optionally from about 0.1 to about 2 wt.% at least one photosensitizer;
e) optionally from about 0.1 to about 20 wt.% at least one coloring agent;
f) optionally from about 0.01 to about 10 wt.% of at least one additive, preferably from about 0.01 to about 1 wt.% at least one surfactant;

the wt.% being based on the total weight of the UV curable security ink composition.
In another aspect, the invention relates to a security feature made of a cured layer of the UV curable security ink composition described herein.
In another aspect, the invention relates to a security document or article comprising the security feature described herein.
In yet another aspect, the invention relates to a method of preparing a security feature as described herein comprising the steps of;

a) applying, preferably by a printing process, the UV curable security ink composition described herein on a substrate;

and

b) at least partially curing the UV curable security ink composition from step a), wherein the curing is preferably performed using UV-LED light source, more preferably having a wavelength from about 360 nm to about 410 nm.

## BRIEF DESCRIPTION OF DRAWINGS / FIGURES

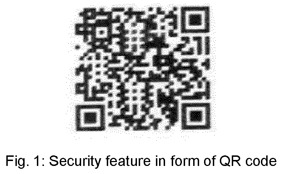

Fig. 1 exhibits a security feature in the form of a QR code obtained by printing the UV curable security ink composition, as described herein.

## DETAILED DESCRIPTION

### Definitions

The following definitions are to be used to interpret the meaning of the terms discussed in the description and recited in the claims.

As used herein, the article "a" indicates one as well as more than one and does not necessarily limit its referent noun to the singular.

As used herein, the term "about" means that the amount or value in question may be the value designated or some other value about the same. The phrases are intended to convey that similar values within a range of ± 5% of the indicated value promote equivalent results or effects according to the invention.

The term "UV" (ultraviolet) as used herein is intended to mean irradiation having a wavelength component in the UV part of the electromagnetic spectrum; typically from 200 nm to 420 nm.

As used herein, the term "at least one" is meant to define one or more than one, for example one or two or three.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

The term "comprising" as used herein is intended to be non-exclusive and open-ended. Thus, for instance a coating composition comprising a compound A may include other compounds besides A. However, the term "comprising" also covers, as a particular embodiment thereof, the more restrictive meanings of "consisting essentially of" and "consisting of", so that for instance "a fountain solution comprising A, B and optionally C" may also (essentially) consist of A and B, or (essentially) consist of A, B and C.

The term "security document" refers to a document which is usually protected against counterfeit or fraud by at least one security feature. Examples of security documents include without limitation value documents and value commercial goods.

The term "security feature" is used to denote an image, pattern or graphic element that can be used for authentication purposes.

Where the present description refers to "preferred" embodiments/features, combinations of these "preferred" embodiments/features shall also be deemed as disclosed as long as this combination of "preferred" embodiments/features is technically meaningful.

The term "rylene substructure" is used to denote the general structure as shown below. The term "rylene substructure" as used herein comprises rylene-based compounds like perylene, terrylene and quaterrylene moieties or even pentarylene and hexarylene derivatives. For the sake of clarity, a rylene substructure means a rylene core (e.g. perylene) having two diimide moieties, as shown exemplarily below.

O O HN NH O O

The term "Ar" is used to denote an aromatic substituent.

The term "wt.%" denotes the amount of the referred component based on the entire weight of the UV curable security ink composition.

The present invention provides UV curable security ink compositions comprising at least one compound P, as described herein.

P is a compound having a structure selected from the group consisting of (1) and (2):

(1)

(2)

In one embodiment, as described herein, (W) is a rylene substructure comprising preferably either one of perylene, terrylene or quaterrylene core structure and comprising at least one substituent of formula (3):

(3)

In a preferred embodiment, the rylene substructure (W) may be selected from a group consisting of perylene, terrylene or quaterrylene core structures, wherein the core structures bear two diimide moieties.

The at least one substituent (3) is attached to the rylene substructure. Preferably, the substituent (3) is attached to the perylene, terrylene or quaterrylene core structure at their corresponding naphthalene ring(s). It is clear to a skilled person, that the placement of the at least one substituent (3) on the naphthalene rings of the rylene substructure (W) can only occur at chemically possible positions. The rylene substructure (W) may accommodate multiple substituents (3) on different naphthalene rings of the rylene substructure (W) i.e. rylene substructure with two (diacrylates) or more (multi-acrylates) substituents (3) are envisaged. Thus, isomeric rylene substructures (W) with substituent (3) are possible. Consequently, even mixtures of isomerically substituted rylene substructures (W) are possible. In a preferred embodiment, at least two substituents (3) (i.e. diacrylate) are present on the rylene substructure (W).

The at least one substituent (3) has a structure as shown before. The $Ar^4$ substituent can be any aromatic group. Preferably the $Ar^4$ group is a phenyl ring. The phenyl ring may or may not be substituted. If substituted, the phenyl ring may further comprise $C_1$-$C_6$ alkyl groups and isomers thereof as substituents.

The at least one substituent (3) further comprises a linker Y. The linker Y may be selected from the group consisting of $-(CH_2)_j-$,$-O-(CH_2)_k-$, $-[-(CH_2)_l-O]_m-(CH_2)_p$ and wherein j = 0 to 6, k = 1 to 6, l = 1 to 3, m = 1 to 3, p = 1 to 3. Preferably the linker Y contains at least one $-(CH_2)_j-$ group, wherein j = 1 to 6, linking the $Ar^4$ moiety to the O-atom as depicted in formula (3).

The at least one substituent (3) further contains at least one (meth)acrylate moiety. In a preferred embodiment the at least one substituent (3) contains one (meth)acrylate moiety. The group R' can either be hydrogen or methyl.

In another embodiment, the at least one compound P can have structure (2), as described herein. As has been shown structurally, compound P with formula (2) lacks an imide moiety compared to the rylene substructure (W). Instead of the missing imide moiety compound (2) may be substituted with different substituent $R^3$. The depicted structure (2) demonstrates this with the - - - - bond pattern. Thus, the $R^3$ substituent is optional.

The at least one compound P having structure (2) also comprises at least one substituent (3) as described herein. It should be noted that the position of the at least one substituent (3) as shown in formula (2) is only exemplary. Thus, it does not exclude the at least one substituent (3) being bonded at another naphthalene ring of the core structure of formula (2). As noted before for the rylene substructure (W), even two or more substituents (3) may be present. In one specific embodiment, the at least one substituent (3), as described herein, can be present at the position of the $R^3$ substituent. In such a case, the $R^3$ substituent is not present i.e. the at least one substituent (3) replaces the $R^3$ substituent.

The at least one compound P additionally comprises $R^1$, $R^2$ or $R^3$ substituents, wherein the $R^1$, $R^2$ and $R^3$ substituents are independently carbocyclic or heterocyclic substituents. In the case of $R^1$ and $R^2$, said substituents are attached, preferably directly, to the imide N of the rylene substructure (W), while in case of $R^3$ the substituent is optional and may be directly attached to the naphthalene ring as shown in formula (2).

The carbocyclic substituents $R^1$, $R^2$ or $R^3$ may be selected from the group consisting of alicyclic and aromatic substituents, optionally bearing further substituents. Preferably, the substituents $R^1$, $R^2$ or $R^3$ are aromatic in nature, optionally substituted. Hence, in a preferred embodiment, $R^1$ is an $Ar^1$ substituent, $R^2$ is a $Ar^2$ substituent and $R^3$ is a $Ar^3$ substituent. In another preferred embodiment, $R^1$, $R^2$ or $R^3$ is a carbocyclic substituent, even more preferably alicyclic or

aromatic substituent, either directly attached to the imide N or indirectly attached through a methylene chain ($(-CH_2)_z$), wherein z = 1 to 6 and said methylene chain being the point of attachment to the imide N of rylene substructure (W) or naphthalene ring of compound (2), as described before. In yet another embodiment, the $R^1$, $R^2$ or $R^3$ substituent may be independently a heterocyclic substituent, preferably a N-containing heterocyclic substituent. For the sake of clarity, it is clear to a skilled person that $R^1$ and $R^2$, which are directly bonded to the diimide-N may not be a heterocyclic, in particular, a N-containing heterocyclic substituent.

In preferred embodiments, the $Ar^{1-3}$ substituent, as described herein, may have a structure (4) as depicted below, wherein $R^4$, $R^5$ and $R^6$ are independently hydrogen, halogen, $C_1$-$C_4$ alkyl and isomers thereof, $C_1$-$C_4$ alkoxy, $C_1$-$C_4$ aminoalkyl, or (fused) aromatic groups. The term 'fused aromatic' covers compounds (4) of the type fused aromatic-alicyclic substituents as well as fused bicyclic or tricyclic compounds.

$R^4$ $R^5$ $R^6$

(4)

Some specific examples of $R^1$, $R^2$ or $R^3$ substituents are represented by the formulae below, where *- indicates the point of contact to the imide N of rylene substructure (W) or imide N of formula (2) or direct contact with the naphthalene moiety (i.e. $R^3$) of formula (2), as described herein and X indicates a F, Br, Cl, $OCH_3$, OPh. Even though substituent X has been shown only in some formulae in the following table, a skilled person may also consider said substituent to be present on the other formulae described herein, as long as chemically possible. It should be noted that the formulae listed below do not encompass an exhaustive list, but a skilled person may consider other chemically comparable substituents.

| Number | Substituent | Number | Substituent | Number | Substituent |
|---|---|---|---|---|---|
| F-1 | * | F-2 | * | F-3 | * |
| F-4 | * | F-5 | * | F-6 | * |
| F-7 | * | F-8 | * | F-9 | * |
| F-10 | * | F-11 | * | F-12 | * |
| F-13 | * | F-14 | * | F-15 | * |
| F-16 | * | F-17 | * | F-18 | * |

(continued)

| Number | Substituent | Number | Substituent | Number | Substituent |
|---|---|---|---|---|---|
| F-19 | * | F-20 | * | F-21 | * X |
| F-22 | * X | F-23 | * X | F-24 | * |
| F-25 | * | F-26 | * | F-27 | * |
| F-28 | * | F-29 | * | F-30 | * |
| F-31 | * | F-32 | * N | F-33 | * N |
| F-34 | * N | F-35 | * N O | F-36 | * N |
| F-37 | N N | F-38 | * N | F-39 | * N N |
| F-40 | * N N | F-41 | * N N | F-42 | * N N O |
| F-43 | * N | F-44 | * N | F-45 | * N |

(continued)

| Number | Substituent | Number | Substituent | Number | Substituent |
|---|---|---|---|---|---|
| F-46 | | F-47 | | F-48 | |
| F-49 | | F-50 | | F-51 | |
| F-52 | | F-53 | | F-54 | |

The UV curable security ink composition described herein comprises UV-radically curable compounds. In a preferred embodiment, the UV curable security printing ink composition comprises one or more radically curable monomers, or one or more radically curable oligomers or mixtures thereof. Alternatively, the UV curable security printing ink compositions described herein may further comprise, in addition to the radically curable compounds described herein, one or more cationically curable compounds.

UV-radically curable compositions comprise one or more radically curable compounds which are cured by free radical mechanisms consisting of the activation by energy of at least one free radical photoinitiator which liberates free radicals which in turn initiate the polymerization so as to form a binder. Preferably, the radically curable compounds are selected from (meth)acrylates, preferably selected from the group consisting of epoxy (meth)acrylates, (meth)acrylated oils, polyester and polyether (meth)acrylates, aliphatic or aromatic urethane (meth)acrylates, silicone (meth)acrylates, acrylic (meth)acrylates and mixtures thereof. The term "(meth)acrylate" in the context of the present invention refers to the acrylate as well as the corresponding methacrylate.

For embodiments wherein the UV curable security ink composition is a screen printing ink composition, a flexography printing ink composition or a rotogravure printing ink composition, said compositions preferably comprise one or more radically curable oligomers, preferably in an amount from about 25 wt.% to about 55 wt.%, one or more radically curable monomers selected from the group consisting of tri(meth)acrylates, tetra(meth)acrylates and mixtures thereof, preferably in an amount from about 10 wt.% to about 50 wt.%, and optionally one or more radically curable monomers selected from the group consisting of mono(meth)acrylates, di(meth)acrylates and mixtures thereof, preferably in an amount from about 0 wt.% to about 50 wt.%, more preferably from about 0 wt.% to about 40 wt.% and even more preferably from about 0 wt.% to about 30 wt.%.

For embodiments wherein the UV curable security ink composition is a contactless fluid microdispensing process printing ink composition, preferably an inkjet printing ink composition, more preferably a drop-on-demand (DOD) inkjet printing ink composition, said compositions preferably comprise one or more radically curable monomers selected from the group consisting of mono(meth)acrylates, di(meth)acrylates, tri(meth)acrylates, tetra(meth)acrylates and mixtures thereof, preferably in an amount from about 40 wt.% to about 95 wt.%, more preferably from about 60 wt.% to about 95 wt.%, and may further comprises one or more radically curable oligomers, preferably in an amount from about 0 wt.% to about 35 wt.%, more preferably from about 0 wt.% to about 20 wt.%, the weight percents being based on the total weight of the UV curable security ink composition.

Radically curable oligomers as used herein refer to relatively high molecular weight oligomeric compounds having a weight average molecular weight (MW) ≥ 400 g/mol, preferably ≥ 800 g/mol, more preferably ≥ 1000 g/mol. The radically curable oligomers described herein are preferably (meth)acrylate oligomers which may be branched or essentially linear, and the (meth)acrylate functional group or groups, respectively, can be terminal groups and/or pendant side groups bonded to the oligomer backbone. Preferably, the radically curable oligomers are (meth)acrylic oligomers, urethane (meth)acrylate oligomers, polyester (meth)acrylate oligomers, polyether based (meth)acrylate oligomers, epoxy (meth)acrylate oligomers, and mixtures thereof.

The one or more mono(meth)acrylate monomers described herein are preferably selected from the group

consisting of alkyl (meth)acrylates, cycloalkyl (meth)acrylates, benzyl (meth)acrylates, phenyl (meth)acrylates (including phenoxyalkyl (meth)acrylates such as phenoxyethyl acrylate), cyclic trimethylolpropane formal acrylate, tetrahydrofurfuryl acrylate, aliphatic urethane (meth)acrylates, alkoxylated (in particular ethoxylated or propoxylated) compounds thereof, and mixtures thereof.

Suitable di(meth)acrylate monomers include without limitation ethylene glycol diacrylate, ethylene glycol dimethacrylate; 1,4-butanediol diacrylate, 1,4-butanediol dimethacrylate; 1,3-butanediol diacrylate, 1,3-butanediol dimethacrylate; 2-methyl-1,3-propanediol diacrylate, 3-methyl-1,5-pentanediol diacrylate; 2-butyl-2-ethyl-1,3-propanediol diacrylate, 1,6-hexanediol diacrylate, 1,6-hexanediol dimethacrylate; neopentyl glycol diacrylate, neopentyl glycol dimethacrylate; 1,9-nonanediol diacrylate; 1,9-nonanediol dimethacrylate; 1,10-decaanediol diacrylate, 1,10-decaanediol dimethacrylate, alkoxylated (in particular ethoxylated and propoxylated) 1,6-hexanediol diacrylates; propoxylated neopentyl glycol diacrylate; ethoxylated 2-methyl-1,3-propanediol diacrylate; tricyclodecanedimethanol diacrylate); diethylene glycol diacrylate, diethylene glycol dimethacrylate; dipropylene glycol diacrylate; triethylene glycol diacrylate, triethylene glycol dimethacrylate; tripropylene glycol diacrylate; tripropylene glycol dimethacrylate, tetraethylene glycol diacrylate, tetraethylene glycol dimethacrylate; polyethylene glycol 200/400/600 diacrylates, polyethylene glycol 200/400/600 dimethacrylate; ethoxylated (EO2/EO3/EO4/EO10) bisphenol A diacrylates, and ethoxylated (EO2/EO3/EO4/EO10) bisphenol A dimethacrylate.

The one or more tri(meth)acrylate monomers described herein are preferably selected from the group consisting of trimethylolpropane triacrylates, trimethylolpropane trimethacrylates, alkoxylated (in particular ethoxylated or propoxylated) trimethylolpropane triacrylates, alkoxylated (in particular ethoxylated or propoxylated) trimethylolpropane trimethacrylates, alkoxylated (in particular ethoxylated or propoxylated) glycerol triacrylates, pentaerythritol triacrylates, alkoxylated (in particular ethoxylated or propoxylated) pentaerythritol triacrylates and mixtures thereof, preferably selected from the group consisting of trimethylolpropane triacrylates, alkoxylated (in particular ethoxylated or propoxylated) trimethylolpropane triacrylates, alkoxylated (in particular ethoxylated or propoxylated) glycerol triacrylates, pentaerythritol triacrylates and mixtures thereof.

The one or more tetra(meth)acrylate monomers described herein are preferably selected from the group consisting of ditrimethylolpropane tetra(meth)acrylates, pentaerythritol tetra(meth)acrylates, alkoxylated (such as for example ethoxylated and propoxylated) pentaerythritol tetra(meth)acrylates and mixtures thereof, preferably selected from the group consisting of ditrimethylolpropane tetra(meth)acrylates, alkoxylated pentaerythritol tetra(meth)acrylates, as well as mixtures thereof.

The UV curable security ink composition described herein may further comprise one or more (meth)acrylate modified vinyl ethers (for example: VEEA®, 2-(2-vinyloxyethoxy)ethyl acrylate (CAS no 86273-46-3)).

Examples of free radical photoinitiators are known to those skilled in the art and are preferably selected from the group consisting of aminoketone compounds (e.g. alpha-aminoketone compounds), hydroxyketone compounds (e.g. alpha-hydroxyketone compounds), alkoxyketones compounds (e.g. alpha-alkoxyketone compounds), acetophenone compounds, benzophenone compounds, ketosulfone compounds, benzyl ketal compounds, benzoin ether compounds, glyoxylate compounds, phosphine oxide compounds and mixtures thereof, preferably selected from the group consisting of phosphine oxide compounds.

The UV curable security ink composition described herein comprises from about 0.1 to about 20 wt.% of the at least one free radical photoinitiator described herein, preferably from about 1 to about 15 wt.%, the weight percents being based on the total weight of the UV curable security ink composition.

Suitable examples of alpha-amino ketone compound include those containing a benzoyl moiety, otherwise called alpha-amino acetophenones, for example 2-methyl-1-[4-(methylthio)phenyl]-2-morpholinopropan-1-one (CAS no. 71868-10-5); 2-benzyl-2-dimethylamino-1-(4-morpholino-phenyl)-butan-1-one (CAS no. 119313-12-1); and 2-dimethylamino-2-(4-methyl-benzyl)-1-(4-morpholin-4-yl-phenyl)-butan-1-one (CAS no. 119344-86-4).

Suitable examples of alpha-hydroxy ketones include without limitation 2-hydroxy-2-methylpropiophenone (CAS no. 7473-98-5); 2-hydroxy-2-methyl-1-(4-tert-butyl)phenylpropan-1-one (CAS no. 68400-54-4); 2-hydroxy-4'-hydroxyethoxy-2-methylpropiophenone (CAS no. 106797-53-9); 2-hydroxy-1-[4-[4-(1-hydroxy-2-methylpropanoyl)phenoxy] phenyl]-2-methylpropan-1-one (CAS no. 474510-57-1); (1-hydroxycyclohexyl)phenylmethanone (CAS no. 947-19-3); 2-hydroxy-1-[4-[4-(1-hydroxy-2-methylpropanoyl)phenoxy]phenyl]-2-methylpropan-1-one (CAS no. 71868-15-0); 1-[2,3-dihydro-1-[4-(1-hydroxy-2-methyl-1-oxopropyl)phenyl]-1,3,3-trimethyl-1H-inden-5-yl]-2-hydroxy-2-methyl-1-propanone (CAS no. 135452-43-6); ar-(1-hydroxy-2-methyl-1-oxopropyl) (1-methylethenyl)-benzene homopolymer (CAS no. 163702-01-0,); α-(1,1-dimethyl-2-oxo-2-phenylethyl)-ω-hydroxy-poly(oxy-1,2-ethanediyl) (9CI) (CAS no. 554449-21-7); polymeric alpha-hydroxy-ketone (CAS no. 1842314-75-3); or mixtures thereof.

Suitable examples of acetophenones include without limitation 2,2-diethoxyacetophenone (CAS no. 6175-45-7); 2-ethylhexy-4-dimethylaminobenzoate (CAS no. 21245-02-3); and 2-methoxy-2-phenylacetophenone (CAS no. 3524-62-7).

Suitable examples of benzophenone compound include without limitation benzophenone (CAS no. 119-61-9); polymeric benzophenone derivatives; 2-methylbenzophenone (CAS no. 131-58-8); 3-methylbenzophenone (CAS no.

643-65-2); 4-methylbenzophenone (CAS no. 134-84-9); 2,4,6-trimethylbenzophenone (CAS no. 954-16-5); 3,3'-dimethyl-4-methoxybenzophenone (CAS no. 41295-28-7); 4-phenylbenzophenone (CAS no. 2128-93-0); 4-chlorobenzophenone (CAS no. 134-85-0); 4,4'-bis(diethylamino)benzophenone (CAS no. 90-93-7); methyl-2-benzoylbenzoate (CAS no. 606-28-0); 4-(4-methylphenylthio)benzophenone (CAS no. 83846-85-9); 4-hydroxybenzophenone laurate (CAS no. 142857-24-7), and a mixture of 50% benzophenone (CAS 119-61-9) and 50% 1-hydroxycyclohexyl phenyl ketone (CAS no. 947-19-3).

A suitable example of ketosulfone compound include without limitation 1-[4-(4-benzoylphenylsulfanyl)phenyl]-2-methyl-2-(4-methylphenylsulfonyl)propan-1-one (CAS no. 272460-97-6).

A suitable example of benzyl ketal compound without limitation 2,2-dimethoxy-2-phenylacetophenone (CAS no. 24650-42-8).

Suitable examples of benzoin ethers include without limitation 2-ethoxy-1,2-diphenylethanone, (CAS no. 574-09-4); 2-isopropoxy-1,2-diphenylethanone (CAS no. 6652-28-4); 2-isobutoxy-1,2-diphenylethanone (CAS no. 22499-12-3); 2-butoxy-1,2-diphenylethanone (CAS no. 22499-11-2); 2,2-dimethoxy-1,2-diphenylethanone (CAS no. 24650-42-8); and 2,2-diethoxyacetophenone (CAS no.6175-45-7).

Suitable examples of glyoxylate compound include without limitation 2-oxo-2-phenylacetic acid methyl ester (CAS no. 15206-55-0); 2-[2-oxo-2-phenyl-acetoxy-ethoxy]ethyl 2-oxo-2-phenylacetate (CAS no. 211510-16-6); oxy-phenyl-acetic acid 2-[2-hydroxy-ethoxy]-ethyl ester (CAS no. 442536-99-4) ; α-(1-oxo-2-phenylacetyl)-ω-[(1-oxo-2-phenylacetyl)oxy]-poly(oxy-1,4-butanediyl) (CAS no. 1313205-82-1); and mixtures thereof; more preferably 2-oxo-2-phenylacetic acid methyl ester (CAS no. 15206-55-0); 2-[2-oxo-2-phenyl-acetoxy-ethoxy]ethyl 2-oxo-2-phenylacetate (CAS no. 211510-16-6); or mixtures thereof.

Suitable examples of phosphine oxide compound include without limitation (1,4,6-trimethylbenzoyl)diphenylphosphine oxide (CAS no. 75980-60-8); 2,4,6-trimethylbenzoyl-ethoxylphenylphosphine oxide (CAS no. 84434-11-7); phenyl-bis(2,4,6-trimethylbenzoyl)phosphine oxide (CAS no. 162881-26-7); bis(1,6-dimethoxybenzoyl)(1,4,4-trimethylpentyl)phosphine oxide (CAS no. 145052-34-2); ethyl (3-benzoyl-2,4,6-trimethylbenzoyl)(phenyl)phosphinate (CAS no. 1539267-56-5); α,α',α"-1,2,3-propanetriyltris[ω-[[phenyl(1,4,6-trimethylbenzoyl)phosphinyl]oxy]-poly(oxy-1,2-ethanediyl) (CAS 1834525-17-5); or mixtures thereof such as for example a mixture of diphenyl(2,4,6-trimethylbenzoyl) phosphine oxide (CAS no. 75980-60-8) and 2-hydroxy-2-methylpropiophenone (CAS no. 7473-98-5), a mixture of phenylbis(2,4,6-trimethylbenzoyl)phosphine oxide (CAS no. 162881-26-7) and 2-hydroxy-2-methylpropiophenone (CAS no. 7473-98-5); and a mixture of ethyl(2,4,6-trimethylbenzoyl)phenylphosphinate (CAS no. 84434-11-7) and 2-hydroxy-2-methylpropiophenone (CAS no. 7473-98-5).

For embodiments wherein the UV curable security ink compositions comprise one or more cationically curable compounds, the ink compositions comprise cationic photoinitiators.

Examples of various useful photoinitiators can be found in standard textbooks such as "Chemistry & Technology of UV & EB Formulation for Coatings, Inks & Paints", Volume III, "Photoinitiators for Free Radical Cationic and Anionic Polymerization", 2nd edition, by J. V. Crivello & K. Dietliker, edited by G. Bradley and published in 1998 by John Wiley & Sons in association with SITA Technology Limited.

It may also be advantageous to include at least one photosensitizer in conjunction with the one or more photoinitiators in order to achieve efficient curing, wherein said sensitizer is preferably a thioxanthone compound. Suitable examples of sensitizer include without limitation 2-methyl thioxanthone (CAS no. 15774-82-0); 2-isopropyl-9H-thioxanthen-9-one (CAS no. 5495-84-1); 4-(1-methylethyl)-9H-thioxanthen-9-one (CAS no. 83846-86-0); 2,4-diethyl-9H-thioxanthen-9-one (CAS no. 82799-44-8); 2-chloro-9H-thioxanthen-9-one (CAS no. 86-39-5); 1-chloro-4-propoxy-9H-thioxanthen-9-one (CAS no. 142770-42-1); 1,3-di[[α-[1-chloro-9-oxo-9H-thioxanthen-4-yl)oxy]acetylpoly[oxy(1-methylethylene)]]oxy]-2,2-bis[[α-[1-cloro-9-oxo-9H-thioxanthen-4-yl)oxy]acetylpoly[oxy(1-methylethylene)]]oxymethylpropane (CAS no. 1003567-83-6); α-[2-[(9-oxo-9H-thioxanthenyl)oxy]acetyl]-ω-[[2-[(9-oxo-9H-thioxanthenyl)oxy]acetyl]oxy]-poly(oxy-1,4-butanediyl (CAS no. 813452-37-8); 2-[2-[1-[2-[[2-(9-oxothioxanthen-2-yl)oxyacetyl]amino]-3-[1-[2-(2-prop-2-enoyloxyethoxy)ethoxy]ethoxy]-2-[1-[2-(2-prop-2-enoyloxyethoxy)ethoxy]ethoxymethyl]propoxy] ethoxy]ethoxy]ethyl prop-2-enoate (CAS no. 1427388-03-1); α-[2-[(9-Oxo-9H-thioxanthenyl)oxy]acetyl]-ω-[[2-[(9-oxo-9H-thioxanthenyl)oxy]acetyl]oxy]-poly(oxy-1,4-butanediyl) (CAS no. 813452-37-8); oligomeric and polymeric compounds thereof (CAS no. 515139-51-2 and 2055335-46-9); and mixtures thereof.

When present, the at least one photosensitizer is preferably present in an amount from about 0.1 wt.% to about 2 wt.%, more preferably from about 0.2 wt.% to about 1 wt.%, the weight percents being based on the total weight of the UV curable security ink composition.

The UV curable security ink composition described herein may further comprise one or more co-sensitizer including aliphatic or aromatic tertiary amines, wherein said amines may be triethyl amine, N,N-dimethyl ethanolamine, N-methyl-diethanolamine, triethanolamine, 2-(dimethylamino) ethyl benzoate, ethyl-4-dimethylamino benzoate, 2-ethylhexyl-4-dimethylamino benzoate, isoamyl-4-dimethylamino benzoate, butoxyethyl-4-dimethylamino benzoate, an amino-modified acrylate resin or oligomeric aminobenzoates.

The UV curable security ink composition described herein may further comprise one or more cationically curable

compounds and one or more cationic photoinitiators. Cationically curable compounds are cured by cationic mechanisms typically including the activation by radiation of one or more compounds which liberate cationic species, such as acids, which in turn initiate the curing so as to react and/or cross-link the monomers and/or oligomers to thereby harden the coating composition. Preferably, the one or more cationically curable compounds are selected from the group consisting of vinyl ethers, propenyl ethers, cyclic ethers such as epoxides, oxetanes, glycidyl ethers and tetrahydrofuranes, lactones, cyclic thioethers, vinyl thioethers, propenyl thioethers, hydroxyl-containing compounds and mixtures thereof, preferably cationically curable compounds selected from the group consisting of vinyl ethers, propenyl ethers, cyclic ethers such as epoxides, oxetanes and tetrahydrofuranes, lactones, and mixtures thereof, more preferably cationically curable compounds selected from the group consisting of vinyl ethers, cyclic ethers such as epoxides, oxetanes and tetrahydrofuranes and mixtures thereof. Typical examples of cationic photoinitiators include iodonium salts, in particular diaryl iodonium salts, oxonium, in particular triaryloxonium salts, sulfonium salts, in particular diaryl sulfonium salts and mixtures thereof.

The UV curable security ink composition described herein may further comprise at least one coloring agent such as a pigment or a dye. For the purpose of the present invention, a pigment is a coloring agent insoluble or slightly soluble in the ink composition, while a dye is completely soluble in the ink composition. Preferably the at least one coloring agent is an IR-transparent organic pigment or an IR-transparent organic dye. It is preferred that the included pigment or dye is transparent in the IR domain, especially near-IR domain, as this allows further incorporation of specific IR absorbers in the ink compositions for the purpose of enhancing anti-counterfeiting resistance of a security feature.

Suitable organic pigments include without limitation C.I. Pigment Yellow 12, C.I. Pigment Yellow 24, C.I. Pigment Yellow 42, C.I. Pigment Yellow 93, C.I. Pigment 109, C.I. Pigment Yellow 110, C.I. Pigment Yellow 138, C.I. Pigment Yellow 139, C.I. Pigment Yellow 147, C.I. Pigment Yellow 150, C. I. Pigment Yellow 155, C.I. Pigment Yellow 173, C.I. Pigment Yellow 185; C.I. Pigment Orange 34, C.I. Pigment Orange 48, C.I. Pigment Orange 49, C.I. Pigment Orange 61, C.I. Pigment Orange 71, C.I. Pigment Orange 73; C.I. Pigment Orange 77; C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 168, C.I. Pigment Red 170, C.I. Pigment Red 177, C.I. Pigment Red 178, C.I. Pigment Red 179, C.I. Pigment Red 185, C.I. Pigment Red 189. C.I. Pigment Red 190, C.I. Pigment Red 194, C.I. Pigment Red 195, C.I. Pigment Red 196, C.I. Pigment Red 202, C.I. Pigment Red 224, C.I. Pigment Red 242, C.I. Pigment Red 254, C.I. Pigment Red 255,C.I. Pigment Red 264; C.I. Pigment Brown 23, C.I. Pigment Brown 25, C.I. Pigment Brown 30, C.I. Pigment Blue 15, C.I. Pigment Blue 15:3, C.I. Pigment Blue 22, C.I. Pigment Blue 60, C.I. Pigment Blue 64, C.I. Pigment Blue 65, C.I. Pigment Violet 19, C.I. Pigment Violet 23, C.I. Pigment Violet 31, C.I. Pigment Violet 32, C.I. Pigment Violet 33, C.I. Pigment Violet 37, C.I. Pigment Green 7, C.I. Pigment Green 36, C.I. Pigment Green 47, C.I. Pigment Green 54, C.I. Pigment Black 31, C.I. Pigment Black 32, C.I. Pigment White 4, C.I. Pigment White 6, C.I. Pigment White 21 and C.I. Pigment White 22 or mixtures thereof.

Suitable organic dyes include without limitation C.I. Solvent Yellow 19, C.I. Solvent Yellow 79, C.I. Solvent Yellow 81, C.I. Solvent Yellow 82, C.I. Solvent Yellow 88, C.I. Solvent Orange 45, C.I. Solvent Orange 54, C.I. Solvent Orange 56, C.I. Solvent Orange 99, C.I. Solvent Red 8, C.I. Solvent Red 119, C.I. Solvent Red 122, C.I. Solvent Red 127, C.I. Solvent Red 130, C.I. Solvent Red 160, C.I. Solvent Red 233, C.I. Solvent Green 7, C.I. Solvent Blue 67, C.I. Solvent Blue 70, C.I. Solvent Brown 27, C.I. Solvent Brown 43, C.I. Solvent Brown 44, C.I. Solvent Black 27, C.I. Solvent Black 28 and C.I. Solvent Black 29 or mixtures thereof.

For embodiments wherein the UV curable security ink composition described herein lacks said at least one coloring agent (i.e. the composition comprises about 0 wt.% of said at least one coloring agent), said UV curable security ink composition comprises the at least one compound P described herein preferably in a total amount from about 0.005 wt.% to about 0.2 wt.%, the wt.% being based on the total weight of the UV curable security ink composition.

For embodiments wherein the UV curable security ink composition described herein comprises said at least one coloring agent, in an amount from about 0.1 wt.% to about 20 wt.%, preferably from about 0.5 wt.% to about 10 wt.%, said UV curable security ink composition comprises the at least one compound P described herein preferably in a total amount from about 0.1 wt.% to about 1.0 wt.%, the wt.% being based on the total weight of the UV curable security ink composition.

The UV curable security ink composition described herein may further comprise at least one additive which includes without limitation compounds and materials that are used for adjusting physical, rheological and chemical parameters of the composition such as the viscosity, the consistency, the UV stability, the adhesion properties, the antistatic properties, the storage stability, etc. Additives described herein may be present in the coating composition in amounts and in forms known in the art, including so-called nano-materials where at least one of the dimensions of the additive is in the range of 1 to 1000 nm. Said one or more additives are preferably is miscible or dispersible with the UV curable security ink composition i.e. they do not phase separate from the rest of composition during the shelf-life.

Examples of additives include surfactants, wherein said surfactant may be a fluorosurfactant, a siloxane, a silicone, a silanol, a polyoxyalkyleneamine, a propoxylated (poly(oxypropylene)) diamine, a alkyl ether amine, a nonyl phenol ethoxylate, an ethoxylated fatty amine, a quaternized copolymer of vinylpyrrolidone and dimethyl aminoethyl methacrylate, a fluorinated organic acid diethanolamine salt, an alkoxylated ethylenediamine, a polyethylene oxide, a polyoxyalkylene polyalkylene polyamine amine, a polyoxyalkylene polyalkylene polyimine, an alkyl phosphate ethoxylate

mixture, a polyoxyalkylene derivative of propylene glycol, a polyoxyethylated fatty alcohol, or mixture thereof. The surfactant additive can be present in an amount from about 0.01 wt.% to about 1.0 wt.%, the weight percents being based on the total weight of the UV curable security ink composition.

The UV curable security ink composition described herein does not contain an evaporable component such as an organic solvent. But sometimes it can be advantageous to incorporate a small amount of one or more organic solvents to improve adhesion to the surface of a substrate after UV curing. In this case, the added one or more organic solvents can be any amount in the range that does not cause problems of solvent resistance and VOC, and preferably in an amount from about 0.1 wt.% to about 5.0 wt.%, the weight percents being based on the total weight of the UV curable security ink composition.

The UV curable security ink compositions described herein are particularly suitable to be applied onto a substrate such as those described herein by a printing process preferably selected from the group consisting of screen printing processes, rotogravure processes, flexography processes and contactless fluid microdispensing process, more preferably contactless fluid microdispensing process.

Screen printing (also referred in the art as silkscreen printing) is a stencil process whereby an ink is transferred to a surface through a stencil supported by a fine fabric mesh of silk, synthetic fibers or metal threads stretched tightly on a frame. The pores of the mesh are block-up in the non-image areas and left open in the image area, the image carrier being called the screen. Screen printing might be flat-bed or rotary. During printing, the frame is supplied with the ink which is flooded over the screen and a squeegee is then drawn across it, thus forcing the ink through the open pores of the screen. At the same time, the surface to be printed is held in contact with the screen and the ink is transferred to it. Screen printing is further described for example in The Printing ink manual, R.H. Leach and R.J. Pierce, Springer Edition, 5th Edition, pages 58-62 and in Printing Technology, J. M. Adams and P.A. Dolin, Delmar Thomson Learning, 5th Edition, pages 293-328.

As known by those skilled in the art, the term rotogravure refers to a printing process which is described for example in "Handbook of print media", Helmut Kipphan, Springer Edition, page 48. Rotogravure is a printing process wherein image elements are engraved into the surface of the cylinder. The non-image areas are at a constant original level. Prior to printing, the entire printing plate (non-printing and printing elements) is inked and flooded with ink. Ink is removed from the non-image by a wiper or a blade before printing, so that ink remains only in the cells. The image is transferred from the cells to the substrate by a pressure typically in the range of 2 to 4 bars and by the adhesive forces between the substrate and the ink. The term rotogravure does not encompass intaglio printing processes (also referred in the art as engraved steel die or copper plate printing processes) which rely for example on a different type of ink.

Flexography printing methods preferably use a unit with a chambered doctor blade, an anilox roller and plate cylinder. The anilox roller advantageously has small cells whose volume and/or density determines the protective varnish application rate. The chambered doctor blade lies against the anilox roller, filling the cells and scraping off surplus protective varnish at the same time. The anilox roller transfers the ink to the plate cylinder which finally transfers the ink to the substrate. Plate cylinders can be made from polymeric or elastomeric materials. Polymers are mainly used as photopolymer in plates and sometimes as a seamless coating on a sleeve. Photopolymer plates are made from light-sensitive polymers that are hardened by ultraviolet (UV) light. Photopolymer plates are cut to the required size and placed in an UV light exposure unit. One side of the plate is completely exposed to UV light to harden or cure the base of the plate. The plate is then turned over, a negative of the job is mounted over the uncured side and the plate is further exposed to UV light. This hardens the plate in the image areas. The plate is then processed to remove the unhardened photopolymer from the non-image areas, which lowers the plate surface in these non-image areas. After processing, the plate is dried and given a post-exposure dose of UV light to cure the whole plate. Preparation of plate cylinders for flexography is described in Printing Technology, J. M. Adams and P.A. Dolin, Delmar Thomson Learning, 5th Edition, pages 359-360.

Depending on the printing process selected to produce the security feature described herein, suitable viscosity values of the UV curable security ink compositions are used: screen printing inks have a viscosity between about 50 mPa·s and about 3000 mPa·s at 25°C, flexography inks have a viscosity between about 50 mPa·s and about 2000 mPa·s at 25°C, rotogravure inks have a viscosity between about 50 mPa·s and about 1000 mPa·s at 25°, wherein the viscosity measurements for security inks having a viscosity value between 100 mPa·s and 3000 mPa·s are carried out with a Brookfield viscometer (model "RVDV-I Prime"), the spindle and rotation speed (rpm) being adapted according to the following viscosity ranges: spindle 21 at 100 rpm for viscosity values between 100 and 500 mPa·s; spindle 27 at 100 rpm for viscosity values between 500 mPa·s and 2500 mPa·s; and spindle 27 at 50 rpm for viscosity values between 2500 mPa·s and 3000 mPa·s and wherein the viscosity measurements for security inks having a viscosity value between 10 mPa·s and 100 mPa·s are carried out either with a rotational viscosimeter DHR-2 from TA Instruments, having a cone-plane geometry and a diameter of 40 mm, at 25°C and 1000 $s^{-1}$, with a DIN 4" cup or with a Brookfield DV1 LV viscosimeter equipped with a spindle LV1 at 0.3 - 60 rpm and a temperature of 45°C.

The contactless fluid microdispensing process described herein is preferably selected from the group consisting of spray coating, aerosol jet printing, electrohydrodynamic printing, slot die coating and inkjet printing, more preferably by an inkjet printing process, wherein said contactless fluid microdispensing printing processes are variable information printing methods allowing for the unique production of the security features described herein. The application process is

chosen as a function of the design and resolution of the security features to be produced.

Spray coating is a technique involving forcing the composition through a nozzle whereby a fine aerosol is formed. A carrier gas and electrostatic charging may be involved to aid in directing the aerosol at the surface that is to be printed. Spray printing allows to print spots and lines. Suitable compositions for spray printing typically have a viscosity between about 10 mPa·s and about 1 Pa·s (25°C, 1000 $s^{-1}$). Resolution of spray coating printing lies in the millimeter range. Spray printing is described for example in F. C. Krebs, Solar Energy Materials & Solar Cells (2009), 93, page 407.

Aerosol jet printing (AJP) is an emerging contactless direct write approach aimed at the production of fine features on a wide range of substrates. AJP is compatible with a wide material range and freeform deposition, allows high resolution (in the order of about 10 micrometers) coupled with a relatively large stand-off distance (e.g. 1-5 mm), in addition to the independence of orientation. The technology involves aerosol generation using either ultrasonic or pneumatic atomizer to generate an aerosol from compositions typically having a viscosity between about 1 mPa·s and about 1 Pa·s (25°C, 1000 $s^{-1}$). Aerosol jet printing is described for example in N. J. Wilkinson et al., The International Journal of Advanced Manufacturing Technology (2019) 105:4599-4619.

Electrohydrodynamic inkjet printing is a high-resolution inkjet printing technology. Electrohydrodynamic inkjet printing technology makes use of externally applied electric fields to manipulate droplets sizes, ejection frequencies and placement on the substrate to get higher resolution than convention inkjet printing, while keeping a high production speed. The resolution of electrohydrodynamic inkjet printing is about two orders of magnitude higher than conventional inkjet printing technology; thus, it can be used for the orienting of nano- and micro-scale patterns. Electrohydrodynamic inkjet printing may be used both in DOD and in continuous mode. Compositions for electrohydrodynamic inkjet printing typically have a viscosity between about 1 mPa·s and about 1 Pa·s (25°C, 1000 $s^{-1}$). Electrohydrodynamic inkjet printing technology is described for example P.V. Raje and N.C. Murmu, International Journal of Emerging Technology and Advanced Engineering, (2014), 4(5), pages 174-183.

Slot die-coating is a 1-dimensional coating technique. Slot-die coating allows for the coating of stripes of material which is well suited for making a multilayer coating with stripes of different materials layered on top of each other. The alignment of the pattern is produced by the coating head being translated along the direction perpendicular to the direction of the web movement. A slot die-coating head comprises a mask that defines the slots of the coating head through which the slot-die coating ink is dispersed. An example of a slot-die coating head is illustrated in F. C. Krebs, Solar Energy Materials & Solar Cells (2009), 93, page 405-406. Suitable compositions for slot die-coating typically have a viscosity between about 1 mPa·s and about 20 mPa·s (25°C, 1000 $s^{-1}$).

According to one embodiment, the UV curable security ink composition described herein is printed by an inkjet printing process, preferably a continuous inkjet (CI) printing process or a drop-on-demand (DOD) inkjet printing process, more preferably a drop-on-demand (DOD) inkjet printing process. Drop-on-demand (DOD) printing is a non-contact printing process, wherein the droplets are only produced when required for printing, and generally by an ejection mechanism rather than by destabilizing a jet. Depending on the mechanism used in the printhead to produce droplets, the DOD printing is divided in piezo impulse, thermal jet, valve jet (viscosity between about 1 mPa·s and about 1 Pa·s (25°C, 1000 $s^{-1}$)) and electrostatic process. Typically, the viscosity of DOD inkjet printing ink compositions suitable for piezo and thermal DOD inkjet printing is below 30 mPa·s at 25°C.

The viscosity of the UV curable security ink composition described herein may be adjusted by varying the ratio between the one or more radically curable monomers and/or the one or more radically curable oligomers described herein.

The security feature described herein is prepared by a method comprising the steps of a) applying, preferably printing, the UV curable security ink composition described herein and b) at least partially curing the UV curable security ink composition from step a).

The UV curable security ink compositions described herein are particularly suitable to be applied onto a substrate such as those described herein by a printing process preferably selected from the group consisting of pad printing processes, screen printing processes, rotogravure processes, flexography processes and contactless fluid microdispensing process, more preferably contactless fluid microdispensing process as described herein, still more preferably an inkjet printing process.

The method described herein comprises the step b) of at least partially curing the UV curable security ink composition from step a), wherein said curing step is carried out with a curing unit. Suitable curing units include equipment for UV curing units comprising a light-emitting-diode (LED) lamp, or an arc discharge lamp, such as a medium-pressure mercury arc (MPMA) or a metal-vapor arc lamp, as the source of the actinic radiation. According to one embodiment, the curing unit is a UV-Vis light-emitting-diode (LED) curing unit. Contrary to medium-pressure mercury lamps that have emission bands in the UV-A, UV-B and UV-C regions of the electromagnetic spectrum, UV-LED lamps emit radiation in the UV-A region, e.g. in the range from about 380 nm to about 410 nm. Moreover, current UV-LED lamps emit quasi monochromatic radiation, i.e. only emit at one wavelength, such as 365 nm, 385 nm, 395 nm or 405 nm.

According to one embodiment, the step b) of at least partially curing the UV curable security ink composition described herein consists of exposing said composition to one or more wavelengths between about 360 nm and about 410 nm emitted by one or more UV-LED curing units so as to form the security feature. Preferably, step b) described herein

consists of exposing the UV curable security ink composition to a single wavelength between 365 nm and 420 nm, such as for example 365 nm, 385 nm, 395 nm or 405 nm, emitted by a UV-LED source so as to form the security feature. The UV curable security ink composition is preferably exposed to UV light at a dose of at least 150 $mJ/cm^2$, more preferably at a dose 200 $mJ/cm^2$ or more, so as to cure the UV curable security ink composition and to form the security feature, wherein said dose may be measured using a UV Power Puck® II radiometer from EIT, Inc., U.S.A.

The present invention further provides security features obtained by the method for producing the security features described herein. The present invention further provides security features made of the UV-Vis curable security inks, preferably the UV-Vis curable continuous inkjet (CI) or a drop-on-demand (DOD) inkjet printing security inks, described herein on the substrate described herein.

According to one embodiment, the security feature described herein consists of one or more indicia. As used herein, the term "indicia" shall mean continuous and discontinuous layers consisting of distinguishing markings or signs or patterns. Preferably, the one or more indicia described herein are selected from the group consisting of codes, symbols, alphanumeric symbols, motifs, geometric patterns (e.g. circles, triangles and regular or irregular polygons), letters, words, numbers, logos, drawings, portraits and combinations thereof. Examples of codes include encoded marks such as an encoded alphanumeric data, a one-dimensional barcode, a two-dimensional barcode, a QR-code, datamatrix and IR-reading codes. The one or more indicia (x30) described herein may be solids indicia and/or raster indicia.

The substrates for the security feature described herein are preferably selected from the group consisting of papers or other fibrous materials (including woven and non-woven fibrous materials), such as cellulose, paper-containing materials, glasses, metals, ceramics, plastics and polymers, metallized plastics or polymers, composite materials and mixtures or combinations of two or more thereof. Typical paper, paper-like or other fibrous materials are made from a variety of fibers including without limitation abaca, cotton, linen, wood pulp, and blends thereof. As is well known to those skilled in the art, cotton and cotton/linen blends are preferred for banknotes, while wood pulp is commonly used in non-banknote security documents. Typical examples of plastics and polymers include polyolefins such as polyethylene (PE) and polypropylene (PP) including biaxially oriented polypropylene (BOPP), polyamides, polyesters such as poly(ethylene terephthalate) (PET), poly(1,4-butylene terephthalate) (PBT), poly(ethylene 2,6-naphthoate) (PEN) and polyvinylchlorides (PVC). Spunbond olefin fibers such as those sold under the trademark Tyvek® may also be used as substrate. Typical examples of metalized plastics or polymers include the plastic or polymer materials described hereabove having a metal disposed continuously or discontinuously on their surface. Typical examples of metals include without limitation aluminum, chromium, copper, gold, silver, alloys thereof and combinations of two or more of the aforementioned metals. The metallization of the plastic or polymer materials described hereabove may be done by an electrodeposition process, a high-vacuum coating process or by a sputtering process. Typical examples of composite materials include without limitation multilayer structures or laminates of paper and at least one plastic or polymer material such as those described hereabove as well as plastic and/or polymer fibers incorporated in a paper-like or fibrous material such as those described hereabove. Of course, the substrate can comprise further additives that are known to the skilled person, such as fillers, sizing agents, whiteners, processing aids, reinforcing or wet strengthening agents, etc.

The present invention further provides security documents comprising the substrate described herein and the security feature described herein or security documents comprising more than one of the security features described herein. Security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, driving licenses, bank cards, credit cards, transactions cards, access documents or cards, entrance tickets, public transportation tickets or titles and the like. The term "value commercial good" refers to packaging material, in particular for pharmaceutical, cosmetics, electronics or food industry that may be protected against counterfeiting and/or illegal reproduction in order to warrant the content of the packaging like for instance genuine drugs. Example of these packaging material include without limitation labels such as authentication brand labels, tamper evidence labels and seals. Preferably, the security document described herein is selected from the group consisting of banknotes, identity documents, right-conferring documents, driving licenses, credit cards, access cards, transportation titles, vouchers and secured product labels. Alternatively, the security features described herein may be produced onto an auxiliary substrate such as for example a security thread, security stripe, a foil, a decal, a window or a label and consequently transferred to a security document in a separate step.

With the aim of further increasing the security level and the resistance against counterfeiting and illegal reproduction of security documents, the substrate described herein may contain printed, coated, or laser-marked or laser-perforated indicia, watermarks, security threads, fibers, planchettes, luminescent compounds, windows, foils, decals, primers and combinations of two or more thereof.

With the aim of increasing the durability through soiling or chemical resistance and cleanliness and thus the circulation lifetime of security documents or with the aim of modifying their aesthetical appearance (e.g. optical gloss), one or more protective layers may be applied on top of the security features or security document described herein. When present, the one or more protective layers are typically made of protective varnishes which may be transparent or slightly colored or tinted and may be more or less glossy. Protective varnishes may be radiation curable compositions, thermal

drying compositions or any combination thereof. Preferably, the one or more protective layers are made of radiation curable. More preferably UV-Vis curable compositions.

The security features described herein may be provided directly on a substrate on which it shall remain permanently (such as for banknote applications). Alternatively, a security feature may also be provided on a temporary substrate for production purposes, from which the security feature is subsequently removed. Thereafter, after hardening/curing of the UV-Vis radiation radically curable security inks, preferably the UV-Vis radiation radically curable screen printing security inks, described herein for the production of the security feature, the temporary substrate may be removed from the security feature.

Alternatively, in another embodiment an adhesive layer may be present on the security feature or may be present on the substrate comprising said security feature, said adhesive layer being on the side of the substrate opposite to the side where the security feature is provided or on the same side as the security feature and on top of the security feature. Therefore, an adhesive layer may be applied to the security feature or to the substrate, said adhesive layer being applied after the curing step has been completed. Such an article may be attached to all kinds of documents or other articles or items without printing or other processes involving machinery and rather high effort. Alternatively, the substrate described herein comprising the security feature described herein may be in the form of a transfer foil, which can be applied to a document or to an article in a separate transfer step. For this purpose, the substrate is provided with a release coating, on which the security feature, as described herein, is produced. One or more adhesive layers may be applied over the so produced security feature.

Also described herein are substrates, security documents, decorative elements and objects comprising more than one, i.e. two, three, four, etc. security feature described herein. Also described herein are articles, in particular security documents, decorative elements or objects, comprising the security feature described herein.

As mentioned hereabove, the security features described herein may be used for protecting and authenticating a security document or decorative elements.

Typical examples of decorative elements or objects include without limitation luxury goods, cosmetic packaging, automotive parts, electronic/electrical appliances, furniture and fingernail articles.

Security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, driving licenses, bank cards, credit cards, transactions cards, access documents or cards, entrance tickets, public transportation tickets, academic diploma or titles and the like, preferably banknotes, identity documents, right-conferring documents, driving licenses and credit cards. The term "value commercial good" refers to packaging materials, in particular for cosmetic articles, nutraceutical articles, pharmaceutical articles, alcohols, tobacco articles, beverages or foodstuffs, electrical/electronic articles, fabrics or jewelry, i.e. articles that shall be protected against counterfeiting and/or illegal reproduction in order to warrant the content of the packaging like for instance genuine drugs. Examples of these packaging materials include without limitation labels, such as authentication brand labels, tamper evidence labels and seals. It is pointed out that the disclosed substrates, value documents and value commercial goods are given exclusively for exemplifying purposes, without restricting the scope of the invention.

The skilled person can envisage several modifications to the specific embodiments described above without departing from the spirit of the present invention. Such modifications are encompassed within the present invention.

Further, all documents referred to throughout this specification are hereby incorporated by reference in their entirety as set forth in full herein.

## EXAMPLES

The present invention is now described in more details with reference to non-limiting examples. The Examples below provide more details for the preparation of the UV curable security ink compositions described herein, as well as the fluorescence intensity and light fastness of machine-readable security features made thereof.

The UV curable security ink compositions E1 - E3 and C1 - C6 are inks without any coloring agent while the UV curable security ink compositions E4 - E6 and C7 - C12 are inks with a coloring agent.

### Preparation of compounds Mo, Mo' and M1 - M9

Mo Mo' M1 M1'

To a mixture of 5,12-dibromoanthra[2,1,9-def:6,5,10-d'e'f']diisochromene-1,3,8,10-tetraone (3.80 g, 6.91 mmol, purity of 95% and containing a mixture of 5,12-dibromo **(Mo),** 5-13-dibromo **(Mo')** isomers and 5,12,13-tribromo isomer (not shown)) (CAS no 118129-60-5, from abcr GmbH) in propionic acid (6.65 g, 6.72 ml), 2,6-diisopropylaniline (3.67 g, 20.7 mmol) was added and the reaction mixture was stirred 18 hours at 140°C. It was then cooled down to room temperature, poured into 20 ml of HCl 2M, stirred for 30 min and then filtrated. The crude red solid was purified by MPLC chromatography on a Puriflash system (cyclohexane-dichloromethane 4:1) to give 2 g (42% yield) of 5,12-dibromo-2,9-bis(2,6-diisopropylphenyl)anthra[2,1,9-def:6,5,10-d'e'f']diisoquinoline-1,3,8,10(2H,9H)-tetraone (CAS: 331861-94-0) as major product **(M1)** and 5,13-dibromo-2,9-bis(2,6-diisopropylphenyl)anthra[2,1,9-def:6,5,10-d'e'f']diisoquinoline-1,3,8,10(2H,9H)-tetraone (CAS: 861853-33-5) as minor product **(M1').** The purification of the diimide product by chromatography allowed to get rid of the 5,12,13-tribromo isomer. $^{1}$H NMR of M1 (400 MHz, $CDCl_3$) δ 9.59 (d, J = 8.1 Hz, 2H), 9.05 (s, 2H), 8.83 (d, J = 8.1Hz, 2H), 7.54 (t, J = 7.8 Hz, 2H), 7.39 (d, J = 7.8 Hz, 4H), 2.76 (sept, J = 6.9 Hz, 4H), 1.22 (d, J = 6.9, 24H). $^{1}$H NMR of **M1'** (400 MHz, $CDCl_3$) δ 9.60 (d, J = 8.1, 2H), 9.05 (s, 2H), 8.84 (d, J = 8.1Hz, 2H), 7.54 (t, J = 7.8 Hz, 2H), 7.39 (d, J = 7.8 Hz, 4H), 2.76 (sept, J = 6.9 Hz, 4H), 1.22 (d, J = 6.9, 24H). The ratio between 5,12-dibromo **(M1)** and 5,13-dibromo **(M1')** isomers has been determined by $^{1}$H-NMR to be 3:1, 75% **(M1),** 25% **(M1').** This mixture was used without separation to synthesize all derivatives. For simplicity reasons, only the major isomer is mentioned in the following syntheses.

M1 M2

To a solution of **M1** (2.0 g, 2.30 mmol) in dimethyl sulfoxide (33 ml), 4-methoxyphenol (1.72 g, 13.8 mmol) and $K_2CO_3$ (1.91 g, 13.8 mmol) were added and the reaction mixture was stirred for 90 min at 115°C. The reaction mixture was then poured into HCl 2M and the purple precipitate was filtrated. The crude product was dissolved in dichloromethane and extracted twice with NaOH 1M. The combined organic phases were dried over magnesium sulfate, filtrated and

concentrated, to give 2,9-bis(2,6-diisopropylphenyl)-5,12-bis(4-methoxyphenoxy)anthra[2,1,9-def:6,5,10-d'e'f']diisoquinoline-1,3,8,10(2H,9H)-tetraone **(M2)** as a red solid (2.10 g, 96%). $^1$H NMR (400 MHz, $CDCl_3$) δ 9.71 (d, J = 8.4 Hz, 2H), 8.73 (d, J = 8.4 Hz, 2H), 8.41 (s, 2H), 7.49 (t, J = 7.8 Hz, 2H), 7.34 (d, J = 7.8 Hz, 4H), 7.20-7.13 (m, 4H), 7.05-6.98 (m, 4H), 3.87 (s, 6H), 2.74 (sept, J = 6.8 Hz, 4H), 1.22-1.13 (m, 24H).


M1
Br
Br
HO
NaH
DMF/20°C/1min
M3
$H_2N$
DMF
1.1) 20°C/30h
1.2) 35°C/20h
M4


To a solution of **M1** (1.0 g, 1.2 mmol) in dimethylformamide (175 ml), the freshly prepared allyl alcoholate, from allyl alcohol (0.33 g, 5.8 mmol) and NaH (0.23 g, wt.%, 5.8 mmol) in 3 ml dimethylformamide was added 20°C under nitrogen, while cooling with an ice bath. The reaction mixture was stirred for 1 minute and rapidly quenched with 200 ml of water. It was then poured into HCl 2M and stirred for 30 min at room temperature. It was extracted several times with dichloromethane, the combined organic phases were washed with NaOH 1M, then dried over magnesium sulfate, filtrated, and concentrated. Purification by silica gel column chromatography (100% dichloromethane) gave 5,12-bis(allyloxy)-2,9-bis(2,6-diisopropylphenyl)anthra[2,1,9-def:6,5,10-d'e'f']diisoquinoline-1,3,8,10(2H,9H)-tetraone **(M3)** as a purple solid (0.24 g, 25%). $^1$H NMR (400 MHz, $CDCl_3$) δ 9.71 (d, J = 8.3 Hz, 2H), 8.73 (d, J = 8.3 Hz, 2H), 8.61 (s, 2H), 7.52 (t, J = 7.8 Hz, 2H), 7.39 (d, J = 7.8 Hz, 4H), 6.38-6.20 (m, 2H), 5.66 (dd, J = 17.3, 1.2 Hz, 2H), 5.51 (dd, J = 10.5, 1.2 Hz, 2H), 5.12 (d, J = 5.5 Hz, 4H), 2.80 (m, J = 6.8 Hz, 4H), 1.22 (d, J = 6.8 Hz, 24H).

To a solution of **M1** (1.0 g, 1.2 mmol) in dimethylformamide (50 ml) under nitrogen, allylamine (0.66 g, 12 mmol) was added at room temperature. The reaction mixture was stirred at 20°C for 30 hours. Another portion of allylamine (0.66 g, 12 mmol) was added, and the reaction mixture was heated to 35°C for 20 hours. The reaction mixture was then poured into HCl 2M and stirred for 30 min. It was extracted several times with dichloromethane, the combined organic phases were washed with HCl 1M, dried over magnesium sulfate, filtrated, and concentrated. Purification by silica gel column chromatography (100% dichloromethane) gave 5-(allylamino)-12-bromo-2,9-bis(2,6-diisopropylphenyl)anthra[2,1,9-def:6,5,10-d'e'f']diisoquinoline-1,3,8,10(2H,9H)-tetraone(**M4**)asagreen solid (0.16 g, 16%). $^1$H NMR (400 MHz, $CDCl_3$) δ 9.53 (d, J = 8.2 Hz, 1H), 9.03 (s, 2H), 9.02 (d, J = 8.2 Hz, 1H). 8.75 (d, J = 8.2 Hz, 1H), 8.57 (d, J = 8.1 Hz, 1H), 8.35 (s, 1H), 7.57-7.48 (m, 2H), 7.38 (m, 4H), 6.10 (dd, J = 10.6, 5.5 Hz, 1H), 5.46 (dd, J = 17.2, 1.5 Hz, 1H), 5.38 (dd, J = 10.6, 1.5 Hz, 1H), 4.25-4.15 (m, 2H), 2.78 (sept, J = 6.8 Hz, 4H), 1.21 (d, J = 6.8 Hz, 24H).

K$_2$CO$_3$
DMSO/115°C/30min
M1
M5

To a solution of **M1** (540 mg, 622 μmol) in dimethyl sulfoxide (8.8 ml), allyl 4-hydroxybenzoate (665 mg, 3.73 mmol) and potassium carbonate (515 mg, 3.73 mmol) were added at room temperature, and the reaction mixture was stirred for 30 min at 115°C. The reaction mixture was then cooled down to room temperature, poured into HCl 2M and stirred for 30 min. The orange precipitate was filtrated, dissolved in dichloromethane and extracted three times with NaOH 1M. The combined organic phases were dried over magnesium sulfate, filtrated and concentrated, to give diallyl 4,4'-((2,9-bis(2,6-diisopropylphenyl)-1,3,8,10-tetraoxo-1,2,3,8,9,10-hexahydroanthra[2,1,9-def:6,5,10-d'e'f']diisoquinoline-5,12-diyl)bis(oxy))dibenzoate **(M5)** as a red solid (600 mg, 96%). $^1$H NMR (400 MHz, $CDCl_3$) δ 9.55 (d, J = 8.3 Hz, 2H), 8.73 (d, 8.3 Hz, 2H), 8.48 (s, 2H), 8.16 (d, J = 8.8 Hz, 4H), 8.07 (d, J = 8.8 Hz, 4H), 7.50 (t, J = 7.8 Hz, 2H), 7.35 (d, J = 7.8 Hz, 4H), 7.21 (d, J = 7.8 Hz, 4H), 7.16 (d, J = 7.8 Hz, 4H), 6.09-6.02 (m, 2H), 5.45-5.40 (m, 2H, 2H), 5.33-5.29 (m, 2H), 4.86-4.82 (m, 4H), 2.73 (sept, J = 6.8 Hz, 3H), 1.18-1.16 (m, 24H).

BBr$_3$
CH$_2$Cl$_2$ / 20°C / 20h
M2
K$_2$CO$_3$
CH$_3$CN / 100°C / 6h
M6

To **M2** (2.20 g, 2.30 mmol) in dichloromethane (28 ml), a solution of tribromoborane (1.31 ml, 13.8 mmol) in 5 ml dichloromethane was added dropwise at 0°C, and the reaction mixture was stirred at 20°C for 20 hours. The reaction mixture was cooled down in an ice bath, slowly hydrolyzed with methanol, and then concentrated. The crude product was solubilized in methanol, precipitated by addition of water and then filtrated. The so-obtained paste was dried overnight in vacuum oven at 80°C, to give 2,9-bis(2,6-diisopropylphenyl)-5,12-bis(4-hydroxyphenoxy)anthra[2,1,9-def:6,5,10-d'e'f'] diisoquinoline-1,3,8,10(2H,9H)-tetraone as a purple solid (2.15 g, 93%). The crude product was used without any further purification. $^1$H NMR (400 MHz, acetone) δ 9.79 (d, J = 8.3 Hz, 2H), 8.70 (d, J = 8.3 Hz, 2H), 8.35 (s, 2H), 7.50-7.43 (m, 2H), 7.36 (d, J = 7.9 Hz, 4H), 7.26 (d, J = 8.7 Hz, 4H), 7.02 (d, J = 8.7 Hz, 4H), 2.82 (m, 4H), 1.18-1.11 (m, 24H).

To a solution of 2,9-bis(2,6-diisopropylphenyl)-5,12-bis(4-hydroxyphenoxy)anthra[2,1,9-def:6,5,10-d'e'f']diisoquinoline-1,3,8,10(2H,9H)-tetraone (430 mg, 464 μmol) in acetonitrile (9.7 ml), potassium carbonate (513 mg, 3.71 mmol) and 3-bromoprop-1-ene (321 μL, 3.71 mmol) were added and the reaction mixture was stirred for 6 hours at 100°C in a microwave oven. The reaction mixture was concentrated, the crude product was dissolved in dichloromethane and extracted three times with HCl 1M. The combined organic phases were dried over magnesium sulfate, filtrated and concentrated, to give 5,12-bis(4-(allyloxy)phenoxy)-2,9-bis(2,6-diisopropylphenyl)anthra[2,1,9-def:6,5,10-d'e'f']diisoquinoline-1,3,8,10(2H,9H)-tetraone **(M6)** as a red-pink solid (400 mg, 86%). $^1$H NMR (400 MHz, $CDCl_3$) δ 9.71 (d, J = 8.3 Hz, 2H), 8.73 (d, J = 8.3 Hz, 2H), 8.42 (s, 2H), 7.52-7.46 (m, 2H), 7.37-7.30 (m, 4H), 7.18-7.14 (m, 4H), 7.04-7.0 (m, 4H), 6.10 (ddt, J = 17.3, 10.5, 5.3 Hz, 2H), 5.46 (dq, J = 17.3, 1.6 Hz, 2H), 5.38-5.28 (m, 4H), 4.59 (dt, J = 5.3, 1.6 Hz, 4H), 2.83-2.66 (m, 4H), 1.25-1.10 (m, 24H).

THF/20°C/1h

**M7**

To a solution of 2,9-bis(2,6-diisopropylphenyl)-5,12-bis(4-hydroxyphenoxy)anthra[2,1,9-def:6,5,10-d'e'f']diisoquinoline-1,3,8,10(2H,9H)-tetraone (2.0 g, 2.16 mmol) in tetrahydrofuran (26 ml), triethylamine (1.80 ml, 12.9 mmol) and acryloyl chloride (1.05 ml, 12.9 mmol) were added and the reaction mixture was stirred for 60 minutes at 20°C. The reaction mixture was then concentrated, suspended in water, and filtrated. The crude product was dissolved in dichloromethane and extracted with NaOH 1M. The combined organic phases were dried over magnesium sulfate, filtrated, and concentrated. Purification by silica gel column chromatography (100% dichloromethane) gave ((2,9-bis(2,6-diisopropylphenyl)-1,3,8,10-tetraoxo-1,2,3,8,9,10-hexahydroanthra[2,1,9-def:6,5,10-d'e'f']diisoquinoline-5,12-diyl)bis(oxy)) bis(4,1-phenylene) diacrylate **(M7)** as a red solid (2.20 g, 85%). $^1$H NMR (400 MHz, $CDCl_3$) δ 9.64 (d, J = 8.3 Hz, 2H), 8.74 (d, J = 8.3 Hz, 2H), 8.48 (s, 2H), 7.54-7.46 (m, 2H), 7.39-7.30 (m, 4H), 7.26-7.20 (m, 8H), 6.64 (dd, J = 17.3, 1.3 Hz, 2H), 6.35 (dd, J = 17.3, 10.4 Hz, 2H), 6.06 (dd, J = 10.4, 1.3 Hz, 2H), 2.75 (sept, J = 6.3 Hz, 4H), 1.19-1.16 (m, 24H).

$K_2CO_3$

DMF/110°C/2h

**M1**

THF/20°C/1h

**M8**

To a solution of **M1** (535 mg, 616 μmol) in dimethylformamide (23.8 ml), $K_2CO_3$ (255 mg, 1.85 mmol) and 4-(2-hydroxyethyl)phenol (255 mg, 1.85 mmol) were added, and the reaction mixture was stirred for 2 hours at 110°C. The reaction mixture was cooled down to room temperature and then poured into HCl 2M. The pink precipitate was filtrated, dissolved in dichloromethane and extracted twice with NaOH 1M. The combined organic phases were dried over magnesium sulfate, filtrated and concentrated to give 2,9-bis(2,6-diisopropylphenyl)-5,12-bis(4-(2-hydroxyethyl)phenoxy)anthra[2,1,9-def:6,5,10-d'e'f']diisoquinoline-1,3,8,10(2H,9H)-tetraone as a pink solid (500 mg, 82%). $^1H$ NMR (400 MHz, $CDCl_3$) δ 9.65 (d, J = 8.3 Hz, 2H), 8.72 (d, J = 8.3 Hz, 2H), 8.45 (s, 2H), 7.51-7.47 (m, 2H), 7.39-7.29 (m, 8H), 7.20-7.12 (m, 4H), 3.93 (t, J = 6.4 Hz, 4H), 2.93 (t, J = 6.4 Hz, 4H), 2.74 (sept, J = 6.7 Hz, 1H), 1.19-1.15 (m, 24H).

To a solution of 2,9-bis(2,6-diisopropylphenyl)-5,12-bis(4-(2-hydroxyethyl)phenoxy)anthra[2,1,9-def:6,5,10-d'e'f']diisoquinoline-1,3,8,10(2H,9H)-tetraone (570 mg, 580 μmol) in tetrahydrofuran (7 ml), triethylamine (342 μL, 2.45 mmol) and acryloyl chloride (241 μL, 2.98 mmol) diluted in 2 ml tetrahydrofuran were added dropwise at 20°C. The reaction mixture was stirred for 1 hour. The reaction mixture was then concentrated, suspended in water, and filtrated. The crude product was dissolved in dichloromethane and extracted three times with NaOH 1M. The combined organic phases were dried over magnesium sulfate, filtrated, and concentrated to give (((2,9-bis(2,6-diisopropylphenyl)-1,3,8,10-tetraoxo-1,2,3,8,9,10-hexahydroanthra[2,1,9-def:6,5,10-d'e'f']diisoquinoline-5,12-diyl)bis(oxy))bis(4,1-phenylene))bis(ethane-2,1-diyl) diacrylate **(M8)** as a dark pink solid (620 mg, 98% yield). $^1H$ NMR (400 MHz, $CDCl_3$) δ 9.66 (d, J = 8.3 Hz, 2H), 8.73 (d, J = 8.3 Hz, 2H), 8.45 (s, 2H), 7.49 (t, J=7.8 Hz, 2H), 7.37-7.33 (m, 8H), 7.17-7.14 (m, 4H), 6.41 (dd, J = 17.3, 1.4 Hz, 2H), 6.14 (dd, J = 17.3, 10.4 Hz, 2H), 5.84 (dd, J = 10.4, 1.4 Hz, 2H), 4.42 (t, J = 6.9 Hz, 4H), 3.04 (t, J = 6.7 Hz, 4H), 2.74 (m, J = 6.7 Hz, 3H), 1.19-1.15 (m, 24H).

To a solution **M1** (350 mg, 403 μmol) in dimethylformamide (3 ml) under argon, potassium carbonate (167 mg, 1.21 mmol) and 4-(2-hydroxyethoxy)phenol (186 mg, 1.21 mmol) were added and the reaction mixture was stirred for 2 hours at 95°C. The reaction mixture was cooled down to room temperature and then poured into HCl 2M. The purple precipitate was filtrated, dissolved in dichloromethane and extracted twice with NaOH 1M. The combined organic phases were dried over magnesium sulfate, filtrated and concentrated, to give 2,9-bis(2,6-diisopropylphenyl)-5,12-bis(4-(2-hydroxyethoxy)phenoxy)anthra[2,1,9-def:6,5,10-d'e'f']diisoquinoline-1,3,8,10(2H,9H)-tetraone as a purple-pink solid (318 mg, 78%). $^1H$ NMR (400 MHz, $CDCl_3$) δ 9.68 (d, J = 8.3 Hz, 2H), 8.72 (d, J = 8.3 Hz, 1H), 8.38 (s, 2H), 7.46 (t, J = 7.8 Hz, 2H), 7.31 (d, J = 7.8 Hz, 4H), 7.17-7.12 (m, 4H), 7.04-6.99 (m, 4H), 4.12 (m, 4H), 3.99 (m, 4H), 2.79-2.63 (m, 4H), 2.0 (t, J = 6.2 Hz, 2H), 1.21-1.09 (m, 24H).

To a solution of 2,9-bis(2,6-diisopropylphenyl)-5,12-bis(4-(2-hydroxyethoxy)phenoxy)anthra[2,1,9-def:6,5,10-d'e'f']diisoquinoline-1,3,8,10(2H,9H)-tetraone (300 mg, 296 μmol) in tetrahydrofuran (3.6 ml), triethylamine (179 mg, 1.77 mmol) and acryloyl chloride (160 mg, 1.77 mmol) diluted were added dropwise at 20°C. The reaction mixture was stirred for 60 min at 20°C. The reaction mixture was then concentrated, suspended in HCl 2M, and filtrated. The crude product was dissolved in dichloromethane and extracted three times with NaOH 1M. The combined organic phases were dried over magnesium sulfate, filtrated, and concentrated to give ((((2,9-bis(2,6-diisopropylphenyl)-1,3,8,10-tetraoxo-1,2,3,8,9,10-hexahydroanthra[2,1,9-def:6,5,10-d'e'f']diisoquinoline-5,12-diyl)bis(oxy))bis(4,1-phenylene))bis(oxy))bis(ethane-2,1-diyl) diacrylate **(M9)** as a dark pink solid (300 mg, 90% yield). $^1H$ NMR (400 MHz, $CDCl_3$) δ 9.67 (d, J = 8.3 Hz, 2H), 8.71 (d, J = 8.3 Hz, 2H), 8.38 (s, 2H), 7.51-7.43 (m, 2H), 7.32 (d, J = 7.8 Hz, 4H), 7.17-7.10 (m, 4H), 7.03-6.97 (m, 4H), 6.46 (dd, J = 17.3, 1.4 Hz, 2H), 6.17 (dd, J = 17.4, 10.4 Hz, 2H), 5.87 (dd, J = 10.4, 1.4 Hz, 2H), 4.58-4.50 (m, 4H), 4.28-4.21 (m, 4H), 2.71 (sept, J = 6.7 Hz, 6H), 1.23-1.09 (m, 24H).

**Preparation of the UV curable security inkjet ink compositions**

The viscosities of the ink vehicles V1-V4 were determined using a Brookfield DV1 LV viscometer equipped with a spindle LV1, at a rotational speed of 30 rpm and a temperature of 45°C.

The ink vehicle (V1, table 1A) was prepared by adding each component one after the other in a brown

polypropylene bottle and dispersing them using a high shear mixer Silverson L5M-A equipped with a square hole screen. After each addition, the mixture was dispersed during about 5 minutes at about 5000 rpm. Finally, the mixture was manually filtered using a 5 μm nylon syringe filter.

**Table 1A**

| **Ink vehicle without a coloring agent** | **V1 wt.%** |
|---|---|
| DPGDA<br>oxybis(methyl-2,1-ethanediyl) diacrylate (Allnex) [CAS no 57472-68-1] | 41.8 |
| GENOMER 1120<br>3,3,5-trimethylcyclohexyl acrylate (Rahn) [CAS no 86178-38-3] | 32.0 |
| Miramer M410<br>ditrimethylolpropane tetraacrylate (Rahn) [CAS no 94108-97-1] | 20.0 |
| Genorad 16<br>stabilizer (Rahn) | 1.0 |
| Tego® Rad 2300<br>wetting agent (Evonik) | 0.1 |
| SpeedCure TPO-L<br>ethyl phenyl(2,4,6-trimethylbenzoyl)phosphinate (Lambson) [CAS no 84434-11-7] | 5.0 |
| Genocure* DETX<br>2,4-diethyl-9H-thioxanthen-9-one (Rahn) [CAS no 82799-44-8] | 0.1 |
| Total | 100 |
| Viscosity (mPa·s) | 6.3 |

The ink vehicles (V2 - V4, table 1B) were independently prepared by adding each component one after the other in a brown polypropylene bottle and dispersing them using a high shear mixer Silverson L5M-A equipped with a square hole screen. After each addition, the mixture was dispersed during about 5 minutes at about 5000 rpm. Finally, the mixture was manually filtered using a 5 μm nylon syringe filter.

Table 1B

| Ink vehicle with a coloring agent | V2 wt.% | V3 wt.% | V4 wt.% |
|---|---|---|---|
| VEEA<br>2-(2-Vinyloxyethoxy)ethyl acrylate (Nippon Shokubai) [CAS no 86273-46-3] | 33.9 | 33.9 | 34 |
| Miramer M410<br>ditrimethylolpropane tetraacrylate (Rahn) [CAS no 94108-97-1] | 10 | 15 | 10 |
| SR339C<br>Mixture of 86.1wt-% 2-phenoxyethyl acrylate (CAS no 48145-04-6), 4wt-% 2-phenoxyethanol (CAS no 122-99-6) and 9.9 wt-% Phenol, ethoxylated, esters with acrylic acid (CAS no 56641-05-5) (Arkema) | 10 | 10 | 10 |
| SR341<br>3-methyl-1,5-pentanediol diacrylate (Sartomer) [CAS no 64194-22-5] | 15 | 28 | 27.4 |
| Genorad 16<br>stabilizer (Rahn) | 1 | 1 | 1 |
| Tego® Rad 2300<br>wetting agent (Evonik) | 0.1 | 0.1 | 0.1 |
| SpeedCure TPOL<br>ethyl phenyl(2,4,6-trimethylbenzoyl)phosphinate (Lambson) [CAS no 84434-11-7) | 9 | 9 | 9 |
| Genocure* DETX<br>2,4-diethyl-9H-thioxanthen-9-one (Rahn) [CAS no 82799-44-8] | 1 | 1 | 1 |
| Solsperse 78000<br>Dispersing agent (Lubrizol), polyurethane polymer | - | - | 2.5 |
| 9W2509<br>White dispersion (55 wt.% C.I. pigment white 6) (Penn color Inc.) | 20 | - | - |
| DUASYN Black A-RG<br>C.I. Solvent Brown 27 (Clariant) [40 wt.% CAS no 72812-34-1 + 30 wt.% CAS no 72812-35-2 + 30 wt-% CAS No 72812-36-3] | - | 2 | - |
| Lumogen Black S 0084<br>C.I. Pigment Black 31 (BASF) [97.5 wt.% CAS No 67075-37-0 + 2.5 wt.% CAS No 7727-43-7] | - | - | 5 |
| Total | 100 | 100 | 100 |
| Viscosity / mPa·s | 11.9 | 5.3 | 10.5 |

The security inks (tables 2A and 2B) were prepared by independently adding the markers to the ink vehicles and placing the mixture during 20 minutes in an ultrasonic bath. The security inks were then left at room temperature between 12 and 24 hours before use.

Table 2A

| UV curable security inkjet ink compositions without a coloring agent | C1 wt.% | C2 wt.% | C3 wt.% | C4 wt.% | C5 wt.% | C6 wt.% | E1 wt.% | E2 wt.% | E3 wt.% |
|---|---|---|---|---|---|---|---|---|---|
| Ink vehicle V1 | 99.98 | | | | | | | | |
| M1 | 0.02 | - | - | - | - | - | - | - | - |
| M2 | - | 0.02 | - | - | - | - | - | - | - |
| M3 | - | - | 0.02 | - | - | - | - | - | - |
| M4 | - | - | - | 0.02 | - | - | - | - | - |
| M5 | - | - | - | - | 0.02 | - | - | - | - |
| M6 | - | - | - | - | - | 0.02 | - | - | - |

(continued)

| UV curable security inkjet ink compositions without a coloring agent | C1 wt.% | C2 wt.% | C3 wt.% | C4 wt.% | C5 wt.% | C6 wt.% | E1 wt.% | E2 wt.% | E3 wt.% |
|---|---|---|---|---|---|---|---|---|---|
| M7 | - | - | - | - | - | - | 0.02 | - | - |
| M8 | - | - | - | - | - | - | - | 0.02 | - |
| M9 | - | - | - | - | - | - | - | - | 0.02 |

**Table 2B**

| UV curable security inkjet ink compositions with a coloring agent | C7 wt.% | C8 wt.% | E4 wt.% | C9 wt.% | C10 wt.% | E5 wt.% | C11 wt.% | C12 wt.% | E6 wt.% |
|---|---|---|---|---|---|---|---|---|---|
| Ink vehicle V2 | 99.95 | 99.95 | 99.95 | - | - | - | - | - | - |
| Ink vehicle V3 | - | - | - | 99.7 | 99.7 | 99.7 | | | |
| Ink vehicle V4 | - | - | - | - | - | - | 99.7 | 99.7 | 99.7 |
| M5 | 0.05 | - | - | 0.3 | - | - | 0.3 | - | - |
| M6 | - | 0.05 | - | - | 0.3 | - | - | 0.3 | - |
| M7 | - | - | 0.05 | - | - | 0.3 | - | - | 0.3 |

**Preparation of the security features**

The substrate used for preparing the security features is a black and white unsealed test chart Leneta N2C-2 obtained from Leneta Company Inc. The white part of substrate is non-fluorescent white paper.

Security features having the shape of a rectangle 13 cm x 10 cm dimension were prepared by hand printing the respective UV curable security ink compositions C1 - C12 and E1 - E6 using a semiautomatic coater (K control coater from RK print, model 001) equipped with bar coating #1 (theoretical thickness about 6 μm) on the white part of Leneta N2C-2 substrate so as to independently form layers. Said hand printing method is used to mimic inkjet printing and in particular drop-on-demand (DOD) inkjet printing.

The obtained layers were then independently at least partially cured with a UV-LED light source (IST LUV20) at 385 nm and a dose of 200 mJ/cm$^2$.

A security feature in the form of a QR code having dimensions of 1.5 cm x 1.5 cm (shown in fig. 1) was prepared by applying the composition of example E6 by a drop-on-demand inkjet printing process using a KM1024i inkjet head (Konica Minolta) on the white part of substrate Leneta N2C-2 and curing the printed composition using IST LUV20 LED-UV lamp (385 nm, 200 mJ/cm$^2$)

**Properties of the security features**

Fluorescence intensity

The fluorescence intensity of the security features made from the UV cured compositions E1 - E6 and comparative compositions C1 - C12 was acquired by measuring the full fluorescence spectrum emitted by said security features on a Fluorolog III instrument (Horiba Sicientific), using the following parameters:

- R13456 photomultiplier (PFR Technologies LLC) (185-950nm)
- Configuration: FL3-22
- angle: 30°
- position: front-face

The excitation and detection slits were fixed for each series of measurements and are indicated in tables 3A - 3B. Only

measurements made using the same excitation and detection slits can be directly compared.

The excitation wavelength (indicated in tables 3A and 3B) corresponds to the excitation maximum of each marker. To determine said excitation maximum, an emission spectrum was measured using an excitation wavelength close to the estimated maximum. Then an excitation spectrum was recorded at the emission maximum wavelength, and the final emission spectrum was obtained by irradiating at the determined excitation maximum.

The maximal fluorescence intensity was derived from the emission spectrum and is indicated in tables 3A - 3B as maximal absolute fluorescence intensity (photons/sec.). A relative value (%) was also given by comparison with the fluorescence intensity of the compositions E1 (without coloring agent) and E4 - E6 (with coloring agent).

Light fastness

The light fastness of the security features made from the cured UV curable security inkjet ink compositions was determined by submitting said security features to a Xenotest procedure (Norm ISO 105 B02). The measurement parameters were as follows.

- Device: Xenotest 220+ (Atlas MTT GmbH)
- Xenon lamp (2200W, 42 W/m$^2$)
- Conditions: 35°C (test chamber), 48% (black BST panel), 40% relative humidity
- Ventilator speed: 2500 rpm
- Filters: < 320 nm

Security features were exposed to 3, 7, 24, 48, 72 hours irradiation time in the Xenotest device. After each step, a fluorescence spectrum was recorded, the maximal fluorescence intensity was determined from the spectrum and compared with the maximal fluorescence intensity before ageing. A light fastness value between 1 and 4 was attributed when the measured maximal fluorescence intensity dropped below 50% of the initial value, according to the following scale:

| Irradiation time (hours) at 50% fluorescence | Light fastness value | Evaluation of light fastness |
|---|---|---|
| 0-6 | 1 | Fail |
| 7-11 | 1.5 | |
| 12-17 | 2 | |
| 18-23 | 2.5 | |
| 24-35 | 3 | Pass |
| 36-47 | 3.5 | |
| >48 | 4 | |

Table 3A

| | C1 | C2 | C3 | C4 | C5 | C6 | E1 | E2 | E3 |
|---|---|---|---|---|---|---|---|---|---|
| **Maximal fluorescence intensity (photons/sec)** | 1.2E+07 | 8.2E+06 | 1.6E+07 | 2.7E+06 | 1.3E+07 | 8.1E+06 | 1.5E+07 | 1.9E+07 | 1.4E+07 |
| **Relative fluorescence intensity* (%)** | 80 | 55 | 107 | 18 | 87 | 54 | 100 | 127 | 93 |
| **Excitation/detection slits (nm)** | 0.7 / 0.7 | | | | | | | | |
| **Maximal fluorescence wavelength(nm)** | 545 | 575 | 585 | 630 | 555 | 575 | 560 | 570 | 575 |
| **Excitation wavelength** | 490 | 505 | 525 | 565 | 500 | 515 | 500 | 510 | 510 |
| **Light fastness (50% threshold) (hours)** | 3 | 32 | 18 | 2 | 18 | 34 | 29 | 32 | 24 |
| **Light fastness scale** | 1 | 3 | 2.5 | 1 | 2.5 | 3 | 3 | 3 | 3 |
| **Description of light fastness** | Fail | Pass | Fail | Fail | Fail | Pass | Pass | Pass | Pass |

* percentage compared to the composition comprising the compound M7

Table 3B

| | C7 | C8 | E4 | C9 | C10 | E5 | C11 | C12 | E6 |
|---|---|---|---|---|---|---|---|---|---|
| Maximal fluorescence intensity (photons/sec) | 5.8E+07 | 3.7E+07 | 7.2E+07 | 3.6E+06 | ** | 2.0+06 | 1.1E+07 | 5.0E+06 | 1.3E+07 |
| Relative fluorescence intensity*(%) | 81 | 51 | 100 | 180 | | 100 | 85 | 38 | 100 |
| Excitation/detection slits (nm) | 0.7 / 0.7 | | | 1.5 / 1.5 | | | | | |
| Maximal fluorescence wavelength (nm) | 560 | 580 | 570 | 565 | ** | 565 | 560 | 560 | 565 |
| Excitation wavelength | 500 | 515 | 500 | 500 | | 500 | 500 | 515 | 500 |
| Light fastness (50% threshold) (hours) | 5 | 26 | 24 | 23 | | >48 | 43 | >48 | >48 |
| Light fastness scale | 1 | 3 | 3 | 2.5 | | 4 | 3.5 | 4 | 4 |
| Evaluation of light fastness | Fail | Pass | Pass | Fail | ** | Pass | Pass | Pass | Pass |

* percentage compared to the composition comprising the compound M7

** not measurable due to inhomogeneous coating

As is evident from the data for the examples, the inventive examples exhibit a suitable and advantageous balance of properties with regards to fluorescence intensity and more specifically improved light fastness, even at low concentrations. Said examples also provide the best printing performance, especially when integrated into inkjet security ink compositions. The homogeneity of the UV curable ink compositions E1 - E6 is emblematic of the compatibility of the markers, especially in terms of solubility, in colored or uncolored UV curable security ink compositions.

## Claims

**1.** A UV curable security ink composition comprising:

a) from about 40 to about 95 wt.%, preferably from about 60 to 95 wt.%, of one or more radically curable monomers, one or more oligomers or mixtures thereof;
b) from about 0.1 to about 20 wt.%, preferably from about 1 to 15 wt.%, of at least one free radical photoinitiator;
c) from about 0.005 to about 5 wt.%, preferably from about 0.01 to 1 wt.%, of at least one compound P, wherein P is a compound having a structure selected from the group consisting of (1) and (2)

(3)
R¹
(W)
R²
(1)
(3)
O
N
R²
R³
O
(2)

wherein

(W) is a rylene substructure comprising preferably either one of perylene, terrylene or quaterrylene core structure and comprising at least one substituent of formula (3) attached to rylene substructure (W),

R'
—O—Ar⁴-Y—O
O
(3)

$R^1$, $R^2$, $R^3$ are independently carbocyclic or heterocyclic substituents, wherein $R^1$ and $R^2$ are attached, preferably directly, to the imide N of rylene substructure (W) and $R^3$ is directly attached to the naphthalene ring

in case of compound (2),
wherein

- - - - - denotes the optional presence of the $R^3$ substituent,
$Ar^4$ is an aromatic substituent,
Y is a linker,
R' is either H or methyl;

d) optionally from about 0.1 to about 2 wt.% at least one photosensitizer;
e) optionally from about 0.1 to about 20 wt.% at least one coloring agent;
f) optionally from about 0.01 to about 10 wt.% of at least one additive, preferably from about 0.01 to about 1 wt.% of at least one surfactant;

the wt.% being based on the total weight of the UV curable security ink composition.

**2.** The UV curable security ink composition according to claim 1, wherein the free radical photoinitiator is selected from the group consisting of aminoketone compounds, hydroxyketone compounds, alkoxyketones compounds, acetophenone compounds, benzophenone compounds, ketosulfone compounds, benzyl ketal compounds, benzoin ether compounds, glyoxylate compounds, phosphine oxide compounds and mixtures thereof, preferably selected from the group consisting of phosphine oxide compounds.

**3.** The UV curable security ink composition according to claims 1 or 2, wherein the at least one photosensitizer is a thioxanthone compound.

**4.** The UV curable security ink composition according to claims 1 to 3, wherein the ink composition comprises about 0 wt.% of the at least one coloring agent, and wherein the at least one compound P is present in a total amount from about 0.005 wt.% to about 0.2 wt.%, the wt.% being based on the total weight of the UV curable security ink composition.

**5.** The UV curable security ink composition according to claims 1 to 3, wherein the ink composition comprises from about 0.1 wt.% to about 20 wt.%, preferably from about 5 to about 10 wt.%, of the at least one coloring agent, and wherein the at least one compound P is present in a total amount from about 0.05 wt.% to about 1.0 wt.%, the wt.% being based on the total weight of the UV curable security ink composition.

**6.** The UV curable security ink composition according to claim 5, wherein the at least one coloring agent is an IR-transparent pigment or an IR-transparent dye.

**7.** The UV curable security ink composition according to claims 1 to 6, wherein the linker Y is selected from the group consisting of $-(CH_2)_j-$,$-O-(CH_2)_k-$, $-[-(CH_2)_l-O]_m-(CH_2)_p$ and wherein j = 0 to 6, k = 1 to 6, l = 1 to 3, m = 1 to 3, p = 1 to 3.

**8.** The UV curable security ink composition according to claims 1 to 7, wherein the $R^{1-3}$ substituent is an aromatic substituent.

**9.** The UV curable security ink composition according to claim 8, wherein the $R^{1-3}$ substituent independently has a structure (4);

$R^4$, $R^5$, $R^6$

(4)

wherein $R^4$, $R^5$ and $R^6$ are independently hydrogen, $C_1$-$C_4$ alkyl and isomers thereof, $C_1$-$C_4$ alkoxy, $C_1$-$C_4$ aminoalkyl, or (fused) aromatic groups.

**10.** The UV curable security ink composition according to claims 1 to 7, wherein the $R^3$ substituent is a heterocyclic

substituent, preferably a N-containing heterocyclic substituent.

**11.** The UV curable security ink composition according to claims 1 to 10, wherein the ink composition is a screen printing ink composition having a viscosity from about 50 mPa·s to about 3000 mPa·s at 25°C, a flexography printing ink composition having a viscosity from about 50 mPa·s to about 2000 mPa·s at 25°C, a rotogravure printing ink composition having a viscosity from about 50 mPa·s to about 1000 mPa·s at 25°C, a contactless fluid microdispensing process ink composition having a viscosity from about 1 mPa·s to about 1000 mPa·s at 25°C.

**12.** The UV curable security ink composition according to claim 11, wherein the ink composition is a contactless fluid microdispensing process printing ink composition, preferably an inkjet printing ink composition, more preferably a drop-on-demand (DOD) inkjet printing ink composition with a viscosity below 30 mPa·s at 25°C.

**13.** A security feature made of a cured layer of the security ink composition according to claims 1 to 12.

**14.** A security document or article comprising the security feature according to claim 13.

**15.** A method of preparing a security feature according to claim 13 comprising the steps of;

a) applying, preferably by a printing process, the UV curable security ink composition recited in any one of claims 1 to 12 on a substrate; and
b) at least partially curing the UV curable security ink composition from step a), wherein the curing is preferably performed using UV-LED light source, more preferably having a wavelength from about 360 nm to about 410 nm.

## Patentansprüche

**1.** UV-härtbare Sicherheitsdruckfarbenzusammensetzung, umfassend:

a) von etwa 40 bis etwa 95 Gew.-%, vorzugsweise von etwa 60 bis 95 Gew.-%, eines oder mehrerer radikalisch härtbarer Monomere, eines oder mehrerer Oligomere oder Mischungen davon;
b) von etwa 0,1 bis etwa 20 Gew.-%, vorzugsweise von etwa 1 bis 15 Gew.-%, mindestens eines freiradikalischen Photoinitiators;
c) von etwa 0,005 bis etwa 5 Gew.-%, vorzugsweise von etwa 0,01 bis 1 Gew.-%, mindestens einer Verbindung P, wobei P eine Verbindung mit einer Struktur ist, ausgewählt aus der Gruppe bestehend aus (1) und (2),

(3)
R¹
(W)
R²
(1)
(3)
O
N
R²
R³
O
(2)

wobei

(W) eine Rylen-Teilstruktur ist, die vorzugsweise entweder eine Perylen-, Terrylen- oder Quaterrylen-Kernstruktur umfasst und mindestens einen Substituenten der Formel (3) aufweist, der an die Rylen-Teilstruktur (W) gebunden ist,

R'
O
Ar⁴
Y
O
O
(3)

$R^1$, $R^2$, $R^3$ unabhängig voneinander carbocyclische oder heterocyclische Substituenten sind, wobei $R^1$ und

$R^2$ an das Imid-N der Rylen-Teilstruktur (W), vorzugsweise direkt, gebunden sind, und $R^3$ im Fall der Verbindung (2) direkt an den Naphthalinring gebunden ist,
wobei

- - - - - das optionale Vorhandensein des Substituenten $R^3$ bezeichnet,
$Ar^4$ ein aromatischer Substituent ist,
Y ein Linker ist,
R' entweder H oder Methyl ist;

d) optional von etwa 0,1 bis etwa 2 Gew.-% mindestens eines Photosensibilisators;
e) optional von etwa 0,1 bis etwa 20 Gew.-% mindestens eines Farbmittels;
f) optional von etwa 0,01 bis etwa 10 Gew.-% mindestens eines Additivs, vorzugsweise etwa 0,01 bis etwa 1 Gew.-% mindestens eines Tensids;

wobei sich die Gew.-% auf das Gesamtgewicht der UV-härtbaren Sicherheitsdruckfarbenzusammensetzung beziehen.

**2.** UV-härtbare Sicherheitsdruckfarbenzusammensetzung nach Anspruch 1, wobei der freiradikalische Photoinitiator ausgewählt ist aus der Gruppe bestehend aus Aminoketonverbindungen, Hydroxyketonverbindungen, Alkoxyketonverbindungen, Acetophenonverbindungen, Benzophenonverbindungen, Ketosulfonverbindungen, Benzylketalverbindungen, Benzoinetherverbindungen, Glyoxylatverbindungen, Phosphinoxidverbindungen und Mischungen davon, vorzugsweise ausgewählt aus der Gruppe bestehend aus Phosphinoxidverbindungen.

**3.** UV-härtbare Sicherheitsdruckfarbenzusammensetzung nach Anspruch 1 oder 2, wobei der mindestens eine Photosensibilisator eine Thioxanthonverbindung ist.

**4.** UV-härtbare Sicherheitsdruckfarbenzusammensetzung nach einem der Ansprüche 1 bis 3, wobei die Druckfarbenzusammensetzung etwa 0 Gew.-% des mindestens einen Farbmittels umfasst, und wobei die mindestens eine Verbindung P in einer Gesamtmenge von etwa 0,005 Gew.-% bis etwa 0,2 Gew.-% vorliegt, wobei sich die Gew.-% auf das Gesamtgewicht der UV-härtbaren Sicherheitsdruckfarbenzusammensetzung beziehen.

**5.** UV-härtbare Sicherheitsdruckfarbenzusammensetzung nach einem der Ansprüche 1 bis 3, wobei die Druckfarbenzusammensetzung von etwa 0,1 Gew.-% bis etwa 20 Gew.-%, vorzugsweise von etwa 5 bis etwa 10 Gew.-%, des mindestens einen Farbmittels umfasst, und wobei die mindestens eine Verbindung P in einer Gesamtmenge von etwa 0,05 Gew.-% bis etwa 1,0 Gew.-% vorliegt, wobei sich die Gew.-% auf das Gesamtgewicht der UV-härtbaren Sicherheitsdruckfarbenzusammensetzung beziehen.

**6.** UV-härtbare Sicherheitsdruckfarbenzusammensetzung nach Anspruch 5, wobei das mindestens eine Farbmittel ein IR-transparentes Pigment oder ein IR-transparenter Farbstoff ist.

**7.** UV-härtbare Sicherheitsdruckfarbenzusammensetzung nach einem der Ansprüche 1 bis 6, wobei der Linker Y ausgewählt ist aus der Gruppe bestehend aus $-(CH_2)_j-$,$-O-(CH_2)_k-$, $-[-(CH_2)_l-O]_m-(CH_2)_p$, und wobei j = 0 bis 6, k = 1 bis 6, l = 1 bis 3, m = 1 bis 3, p = 1 bis 3.

**8.** UV-härtbare Sicherheitsdruckfarbenzusammensetzung nach einem der Ansprüche 1 bis 7, wobei der Substituent $R^{1-3}$ ein aromatischer Substituent ist.

**9.** UV-härtbare Sicherheitsdruckfarbenzusammensetzung nach Anspruch 8, wobei der Substituent $R^{1-3}$ unabhängig eine Struktur (4) aufweist;

R4
R5
R6

(4)

wobei $R^4$, $R^5$ und $R^6$ unabhängig voneinander Wasserstoff, $C_1$-$C_4$-Alkyl und Isomere davon, $C_1$-$C_4$-Alkoxy, $C_1$-$C_4$-Aminoalkyl oder (kondensierte) aromatische Gruppen sind.

**10.** UV-härtbare Sicherheitsdruckfarbenzusammensetzung nach einem der Ansprüche 1 bis 7, wobei der Substituent $R^3$ ein heterocyclischer Substituent, vorzugsweise ein N-haltiger heterocyclischer Substituent, ist.

**11.** UV-härtbare Sicherheitsdruckfarbenzusammensetzung nach einem der Ansprüche 1 bis 10, wobei die Druckfarbenzusammensetzung eine Siebdruckfarbenzusammensetzung mit einer Viskosität von etwa 50 mPa·s bis etwa 3000 mPa·s bei 25°C, Flexodruckfarbenzusammensetzung mit einer Viskosität von etwa 50 mPa·s bis etwa 2000 mPa·s bei 25°C, eine Tiefdruckfarbenzusammensetzung mit einer Viskosität von etwa 50 mPa·s bis etwa 1000 mPa·s bei 25°C, eine Druckfarbenzusammensetzung für ein kontaktloses Flüssigkeitsmikrodosierverfahren mit einer Viskosität von etwa 1 mPa·s bis etwa 1000 mPa·s bei 25°C ist.

**12.** UV-härtbare Sicherheitsdruckfarbenzusammensetzung nach Anspruch 11, wobei die Druckfarbenzusammensetzung eine Druckfarbenzusammensetzung für ein kontaktloses Flüssigkeitsmikrodosierverfahren, vorzugsweise eine Tintenstrahldruckfarbenzusammensetzung, insbesondere eine Drop-on-Demand-(DOD)-Tintenstrahldruckfarbenzusammensetzung mit einer Viskosität von weniger als 30 mPa·s bei 25°C, ist.

**13.** Sicherheitsmerkmal, gebildet aus einer gehärteten Schicht der Sicherheitsdruckfarbenzusammensetzung nach einem der Ansprüche 1 bis 12.

**14.** Sicherheitsdokument oder Sicherheitsartikel, umfassend das Sicherheitsmerkmal nach Anspruch 13.

**15.** Verfahren zur Herstellung eines Sicherheitsmerkmals nach Anspruch 13, umfassend die Schritte:

a) Aufbringen der UV-härtbaren Sicherheitsdruckfarbenzusammensetzung nach einem der Ansprüche 1 bis 12 auf ein Substrat, vorzugsweise mittels eines Druckverfahrens; und
b) zumindest teilweises Härten der in Schritt a) aufgebrachten UV-härtbaren Sicherheitsdruckfarbenzusammensetzung, wobei die Härtung vorzugsweise mittels einer UV-LED-Lichtquelle erfolgt, insbesondere mit einer Wellenlänge von etwa 360 nm bis etwa 410 nm.

## Revendications

**1.** Composition d'encre de sécurité durcissable par UV comprenant :

a) d'environ 40 à environ 95 % en poids, de préférence d'environ 60 à 95 % en poids, d'un ou plusieurs monomères durcissables par voie radicalaire, d'un ou plusieurs oligomères ou de mélanges de ceux-ci ;
b) d'environ 0,1 à environ 20 % en poids, de préférence d'environ 1 à 15 % en poids, d'au moins un photoinitiateur de radicaux libres ;
c) d'environ 0,005 à environ 5 % en poids, de préférence d'environ 0,01 à 1 % en poids, d'au moins un composé P, dans laquelle P est un composé ayant une structure sélectionnée dans le groupe constitué de (1) et (2)

(3)
R1
(W)
R2
(1)
(3)
O
N
R2
R3
O
(2)


dans laquelle

(W) est une sous-structure de rylène comprenant de préférence l'une d'une structure centrale de pérylène, terrylène ou quaterrylène et comprenant au moins un substituant de formule (3) fixé à la sous-structure de rylène (W),

(3)

$R^1$, $R^2$, $R^3$ sont indépendamment des substituants carbocycliques ou hétérocycliques, dans laquelle $R^1$ et $R^2$ sont fixés, de préférence directement, au N d'imide de la sous-structure de rylène (W) et $R^3$ est directement fixé au noyau naphtalène dans le cas du composé (2),
dans laquelle

- - - - - désigne la présence optionnelle du substituant $R^3$,
$Ar^4$ est un substituant aromatique,
Y est un lieur,
R' est soit un H soit un méthyle ;

d) optionnellement d'environ 0,1 à environ 2 % en poids d'au moins un photosensibilisateur ;
e) optionnellement d'environ 0,1 à environ 20 % en poids d'au moins un agent colorant ;
f) optionnellement d'environ 0,01 à environ 10 % en poids d'au moins un additif, de préférence d'environ 0,01 à environ 1 % en poids d'au moins un tensioactif ;

le % en poids étant basé sur le poids total de la composition d'encre de sécurité durcissable par UV.

**2.** Composition d'encre de sécurité durcissable par UV selon la revendication 1, dans laquelle le photoinitiateur de radicaux libres est sélectionné dans le groupe constitué des composés d'aminocétone, des composés d'hydroxy-cétone des composés d'alcoxycétones, des composés d'acétophénone, des composés de benzophénone, des composés de cétosulfone, des composés de benzyl cétals, des composés d'éther de benzoïne, des composés de glyoxylate, des composés d'oxyde de phosphine et des mélanges de ceux-ci, de préférence sélectionnés dans le groupe constitué des composés d'oxyde de phosphine.

**3.** Composition d'encre de sécurité durcissable par UV selon les revendications 1 ou 2, dans laquelle l'au moins un photosensibilisateur est un composé de thioxanthone.

**4.** Composition d'encre de sécurité durcissable par UV selon les revendications 1 à 3, dans laquelle la composition d'encre comprend environ 0 % en poids de l'au moins un agent colorant, et dans laquelle l'au moins un composé P est présent en une quantité totale d'environ 0,005 % en poids à environ 0,2 % en poids, le % en poids étant basé sur le poids total de la composition d'encre de sécurité durcissable par UV.

**5.** Composition d'encre de sécurité durcissable par UV selon les revendications 1 à 3, dans laquelle la composition d'encre comprend d'environ 0,1 % en poids à environ 20 % en poids, de préférence d'environ 5 à environ 10 % en poids, de l'au moins un agent colorant, et dans laquelle l'au moins un composé P est présent en une quantité totale d'environ 0,05 % en poids à environ 1,0 % en poids, le % en poids étant basé sur le poids total de la composition d'encre de sécurité durcissable par UV.

**6.** Composition d'encre de sécurité durcissable par UV selon la revendication 5, dans laquelle l'au moins un agent colorant est un pigment transparent aux IR ou un colorant transparent aux IR.

**7.** Composition d'encre de sécurité durcissable par UV selon les revendications 1 à 6, dans laquelle le lieur Y est sélectionné dans le groupe constitué de $-(CH_2)_j-$,$-O-(CH_2)_k-$, $-[-(CH_2)_l-O]_m-(CH_2)_p$ et dans laquelle j= 0 à 6, k = 1 à 6, l = 1 à 3, m = 1 à 3, p = 1 à 3.

**8.** Composition d'encre de sécurité durcissable par UV selon les revendications 1 à 7, dans laquelle le substituant $R^{1-3}$ est un substituant aromatique.

**9.** Composition d'encre de sécurité durcissable par UV selon la revendication 8, dans laquelle le substituant $R^{1-3}$ a indépendamment une structure (4) ;

(4)

dans laquelle $R^4$, $R^5$ et $R^6$ sont indépendamment un hydrogène, un $C_1$-$C_4$-alkyle et des isomères de ceux-ci, un $C_1$-$C_4$-alcoxy, un $C_1$-$C_4$-aminoalkyle, ou des groupes aromatiques (fusionnés).

**10.** Composition d'encre de sécurité durcissable par UV selon les revendications 1 à 7, dans laquelle le substituant $R^3$ est un substituant hétérocyclique, de préférence un substituant hétérocyclique contenant du N.

**11.** Composition d'encre de sécurité durcissable par UV selon les revendications 1 à 10, dans laquelle la composition d'encre est une composition d'encre pour sérigraphie ayant une viscosité d'environ 50 mPa·s à environ 3 000 mPa·s à 25 °C, une composition d'encre pour impression flexographique ayant une viscosité d'environ 50 mPa·s à environ 2 000 mPa·s à 25 °C, une composition d'encre pour impression en héliogravure ayant une viscosité d'environ 50 mPa·s à environ 1 000 mPa·s à 25°C, une composition d'encre pour procédé de microdistribution de fluide sans contact ayant une viscosité d'environ 1 mPa·s à environ 1 000 mPa·s à 25 °C.

**12.** Composition d'encre de sécurité durcissable par UV selon la revendication 11, dans laquelle la composition d'encre est une composition d'encre pour impression par procédé de microdistribution de fluide sans contact, de préférence une composition d'encre pour impression par jet d'encre, de manière davantage préférée une composition d'encre pour impression par jet d'encre de type gouttes à la demande (DOD) ayant une viscosité inférieure à 30 mPa·s à 25 °C.

**13.** Caractéristique de sécurité faite d'une couche durcie de la composition d'encre de sécurité selon les revendications 1 à 12.

**14.** Document ou article de sécurité comprenant la caractéristique de sécurité selon la revendication 13.

**15.** Procédé de préparation d'une caractéristique de sécurité selon la revendication 13 comprenant les étapes de :

a) application, de préférence par un procédé d'impression, de la composition d'encre de sécurité durcissable par UV selon l'une quelconque des revendications 1 à 12 sur un substrat ; et
b) durcissement au moins partiel de la composition d'encre de sécurité durcissable par UV de l'étape a), dans laquelle le durcissement est de préférence effectué en utilisant une source de lumière DEL UV, de manière davantage préférée ayant une longueur d'onde d'environ 360 nm à environ 410 nm.

Fig. 1: Security feature in form of QR code

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080167467 A
- WO 2011147857 A1
- WO 2012160182 A1
- EP 3571201 A


### Non-patent literature cited in the description


- *CHEMICAL ABSTRACTS*, 86273-46-3
- *CHEMICAL ABSTRACTS*, 71868-10-5
- *CHEMICAL ABSTRACTS*, 119313-12-1
- *CHEMICAL ABSTRACTS*, 119344-86-4
- *CHEMICAL ABSTRACTS*, 7473-98-5
- *CHEMICAL ABSTRACTS*, 68400-54-4
- *CHEMICAL ABSTRACTS*, 106797-53-9
- *CHEMICAL ABSTRACTS*, 474510-57-1
- *CHEMICAL ABSTRACTS*, 947-19-3
- *CHEMICAL ABSTRACTS*, 71868-15-0
- *CHEMICAL ABSTRACTS*, 135452-43-6
- *CHEMICAL ABSTRACTS*, 163702-01-0
- *CHEMICAL ABSTRACTS*, 554449-21-7
- *CHEMICAL ABSTRACTS*, 1842314-75-3
- *CHEMICAL ABSTRACTS*, 6175-45-7
- *CHEMICAL ABSTRACTS*, 21245-02-3
- *CHEMICAL ABSTRACTS*, 3524-62-7
- *CHEMICAL ABSTRACTS*, 119-61-9
- *CHEMICAL ABSTRACTS*, 131-58-8
- *CHEMICAL ABSTRACTS*, 643-65-2
- *CHEMICAL ABSTRACTS*, 134-84-9
- *CHEMICAL ABSTRACTS*, 954-16-5
- *CHEMICAL ABSTRACTS*, 41295-28-7
- *CHEMICAL ABSTRACTS*, 2128-93-0
- *CHEMICAL ABSTRACTS*, 134-85-0
- *CHEMICAL ABSTRACTS*, 90-93-7
- *CHEMICAL ABSTRACTS*, 606-28-0
- *CHEMICAL ABSTRACTS*, 83846-85-9
- *CHEMICAL ABSTRACTS*, 142857-24-7
- *CHEMICAL ABSTRACTS*, 272460-97-6
- *CHEMICAL ABSTRACTS*, 24650-42-8
- *CHEMICAL ABSTRACTS*, 574-09-4
- *CHEMICAL ABSTRACTS*, 6652-28-4
- *CHEMICAL ABSTRACTS*, 22499-12-3
- *CHEMICAL ABSTRACTS*, 22499-11-2
- *CHEMICAL ABSTRACTS*, 15206-55-0
- *CHEMICAL ABSTRACTS*, 211510-16-6
- *CHEMICAL ABSTRACTS*, 442536-99-4
- *CHEMICAL ABSTRACTS*, 1313205-82-1
- *CHEMICAL ABSTRACTS*, 75980-60-8
- *CHEMICAL ABSTRACTS*, 84434-11-7
- *CHEMICAL ABSTRACTS*, 162881-26-7
- *CHEMICAL ABSTRACTS*, 145052-34-2
- *CHEMICAL ABSTRACTS*, 1539267-56-5
- *CHEMICAL ABSTRACTS*, 1834525-17-5
- Chemistry & Technology of UV & EB Formulation for Coatings, Inks & Paints. **J. V. CRIVELLO** ; **K. DIETLIKER**. Photoinitiators for Free Radical Cationic and Anionic Polymerization. John Wiley & Sons, 1998, vol. III
- *CHEMICAL ABSTRACTS*, 15774-82-0
- *CHEMICAL ABSTRACTS*, 5495-84-1
- *CHEMICAL ABSTRACTS*, 83846-86-0
- *CHEMICAL ABSTRACTS*, 82799-44-8
- *CHEMICAL ABSTRACTS*, 86-39-5
- *CHEMICAL ABSTRACTS*, 142770-42-1
- *CHEMICAL ABSTRACTS*, 1003567-83-6
- *CHEMICAL ABSTRACTS*, 813452-37-8
- *CHEMICAL ABSTRACTS*, 1427388-03-1
- *CHEMICAL ABSTRACTS*, 515139-51-2
- *CHEMICAL ABSTRACTS*, 2055335-46-9
- **R.H. LEACH** ; **R.J. PIERCE**. The Printing ink manual. Springer, 58-62
- Printing Technology. **J. M. ADAMS** ; **P.A. DOLIN**. Delmar Thomson Learning, 293-328
- **HELMUT KIPPHAN**. Handbook of print media. Springer, 48
- Printing Technology. **J. M. ADAMS** ; **P.A. DOLIN**. Delmar Thomson Learning, 359-360
- **F. C. KREBS**. *Solar Energy Materials & Solar Cells*, 2009, vol. 93, 407
- **N. J. WILKINSON et al.** *The International Journal of Advanced Manufacturing Technology*, 2019, vol. 105, 4599-4619
- **P.V. RAJE** ; **N.C. MURMU**. *International Journal of Emerging Technology and Advanced Engineering*, 2014, vol. 4 (5), 174-183
- **F. C. KREBS**. *Solar Energy Materials & Solar Cells*, 2009, vol. 93, 405-406
- *CHEMICAL ABSTRACTS*, 118129-60-5
- *CHEMICAL ABSTRACTS*, 331861-94-0
- *CHEMICAL ABSTRACTS*, 861853-33-5